(19) Europäisches Patentamt / European Patent Office / Office européen des brevets

(11) **EP 2 032 405 B1**

(12) **FASCICULE DE BREVET EUROPEEN**

(45) Date de publication et mention
de la délivrance du brevet:
**16.11.2011   Bulletin 2011/46**

(21) Numéro de dépôt: **07766004.1**

(22) Date de dépôt: **04.05.2007**

(51) Int Cl.:
**B60W 20/00** *(2006.01)*

(86) Numéro de dépôt international:
**PCT/FR2007/051224**

(87) Numéro de publication internationale:
**WO 2008/000980 (03.01.2008 Gazette 2008/01)**

(54) **SYSTEME MICRO-HYBRIDE POUR VEHICULE AUTOMOBILE INCORPORANT UN MODULE DE STRATEGIES DE PILOTAGE**

MIKROHYBRIDSYSTEM FÜR EIN MOTORFAHRZEUG MIT EINEM STEUERUNGSSTRATEGIEMODUL

MICRO-HYBRID SYSTEM FOR MOTOR VEHICLE INCORPORATING A PILOTING STRATEGIES MODULE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité:  **27.06.2006   FR 0652676**

(43) Date de publication de la demande:
**11.03.2009   Bulletin 2009/11**

(73) Titulaire: **VALEO EQUIPEMENTS ELECTRIQUES MOTEUR**
**94046 Créteil Cedex (FR)**

(72) Inventeurs:
- **ROUIS, Oussama**
  **94000 Creteil (FR)**
- **BOUDJEMAI, Farouk**
  **F-91460 Marcoussis (FR)**
- **LECOLE, Brice**
  **F-75012 Paris (FR)**
- **MASFARAUD, Julien**
  **93100 Montreuil (FR)**
- **LAURENCE, Magali**
  **F-75012 Paris (FR)**
- **TREGUER, Matthieu**
  **92350 Le Plessis Robinson (FR)**
- **DOFFIN, Hugues**
  **F-92290 Chatenay Malabry (FR)**
- **LEBOEUF, Cédric**
  **67230 Benfeld (FR)**
- **TASPINAR, Ertugrul**
  **F-94370 Sucy-en-brie (FR)**
- **ARMIROLI, Paul**
  **F-94440 Marolles En Brie (FR)**
- **GERARD, Alain**
  **F-94170 Le Perreux (FR)**
- **DUBUS, Jean-Marc**
  **77380 Combs la Ville (FR)**
- **DE VRIES, Arnaud**
  **F-92170 Vanves (FR)**
- **BLANC, Eric**
  **F-94140 Alfortville (FR)**

(56) Documents cités:
| | |
|---|---|
| US-A- 5 345 154 | US-A- 5 965 991 |
| US-A1- 2002 109 407 | US-A1- 2004 108 831 |
| US-A1- 2005 088 139 | US-B1- 6 234 932 |
| US-B1- 6 365 983 | |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne de manière générale des systèmes micro-hybrides pour véhicule notamment des véhicules automobiles.

Plus particulièrement, la présente invention concerne un système micro-hybride, comprenant une machine électrique tournante couplée mécaniquement au moteur thermique du véhicule, un convertisseur alternatif-continu (AC-DC), un convertisseur continu-continu (DC-DC), des réservoirs d'énergie électrique pour stocker une énergie électrique produite par la machine électrique tournante et une unité de commande.

Dans les dispositifs micro-hybrides connus du type ci-dessus, la machine électrique tournante est généralement un alterno-démarreur qui, outre les fonctions de démarreur du moteur thermique et d'alternateur qu'il remplit, peut également être sollicité pour une fonction de freinage récupératif et une fonction d'assistance en couple (également appelée « boost » en anglais).

L'énergie électrique récupérée par le freinage récupératif peut être stockée dans des condensateurs de très grande capacité appelés « UCAP » ou « supercondensateur » par l'homme du métier et sert à alimenter un réseau de bord sous une tension continue fluctuante. Ce réseau de bord sous tension continue fluctuante est distinct du réseau 12 Volt classique équipant les véhicules automobiles et complète celui-ci en ayant à charge plus particulièrement l'alimentation électrique de dispositifs consommateurs capables d'accepter une tension fluctuante supérieure à 12 Volt.

Dans ces dispositifs micro-hybrides de la technique antérieure, l'unité de commande fonctionne selon un mode esclave et est pilotée par une unité électronique de commande du véhicule selon des lois de commande propres à celui-ci et gérées par celui-ci.

Par US6234932B1 qui indique l'état de la technique antérieur, est connu un dispositif de contrôle d'un véhicule hybride équipé d'un moteur-générateur fonctionnant en moteur pour assister en couple un moteur à combustion interne et fonctionnant en génératrice pour le freinage récupératif de l'énergie cinétique du véhicule. Le dispositif de contrôle, en fonction des conditions de fonctionnement du véhicule, commande une opération d'assistance en couple en fournissant au moteur-générateur une puissance électrique provenant d'une unité de stockage d'énergie électrique ou une opération de freinage récupératif rechargeant l'unité de stockage à partir d'une puissance électrique délivrée par le moteur-générateur. Le dispositif de contrôle détermine également un mode d'accélération pour réaliser une opération d'assistance en couple ou un mode de croisière pour réaliser de manière sélective l'opération d'assistance et une opération de récupération d'énergie, en fonction d'une vitesse de rotation du moteur thermique et d'un niveau d'appui sur l'accélérateur du véhicule, ou d'une vitesse du véhicule et d'un niveau d'appui sur l'accélérateur.

La présente invention a pour objet de fournir un système micro-hybride d'un type nouveau dans lequel toute l'intelligence nécessaire au pilotage du système micro-hybride est intégrée dans le système micro-hybride lui-même, offrant ainsi un équipement intégré qui minimise ses sollicitations au système du véhicule et dans lequel il devient possible d'incorporer des stratégies de pilotage élaborées parfaitement adaptées aux sous-ensembles composant le système micro-hybride.

Le système micro-hybride pour véhicule de transport comprend une machine électrique tournante apte à être couplée mécaniquement à un moteur du véhicule, un convertisseur alternatif-continu, un convertisseur continu-continu, des premier et second réservoirs d'énergie électrique aptes à stocker une énergie électrique produite par la machine tournante et à restituer celle-ci pour des dispositifs consommateurs équipant le véhicule, et des moyens de commande pour commander le fonctionnement du système micro-hybride. Les moyens de commande comprennent des moyens de pilotage à la fois aptes à piloter de manière autonome des modes de fonctionnement du système micro-hybride selon une pluralité de stratégies en fonction au moins de leur propre connaissance d'un état interne du système micro-hybride et d'un état du véhicule et aptes à piloter en esclave les modes de fonctionnement conformément à des instructions contenues dans des demandes externes provenant d'un système du véhicule.

Conformément à l'invention, les moyens de pilotage comprennent des moyens à machine d'état autorisant des transitions entre les modes de fonctionnement du système micro-hybride en fonction au moins d'informations de supervision et d'informations de sécurité produites par les moyens de pilotage. De préférence, lesdites informations de supervision et informations de sécurité sont fournies respectivement par des moyens de supervision et les moyens de sécurité.

La présente invention autorise une optimisation du rendement de la production d'électricité dans le but de réduire la consommation en carburant du véhicule. Ce résultat est obtenu notamment du fait d'une gestion des charges mécaniques (alternateur) sur le moteur thermique et des charges électriques sur le réseau d'alimentation en électricité.

Ainsi, par exemple, lorsque la machine électrique tournante opère dans le mode alternateur, le système micro-hybride peut rester esclave et être piloté depuis l'extérieur ou bien recevoir d'un superviseur du véhicule ou du moteur thermique un estimateur du rendement du moteur thermique pour charger le moteur thermique de manière sélective dans les zones où la conversion carburant / énergie mécanique a un bon rendement, quelle que soit la finalité de l'énergie mécanique prélevée (électricité, climatisation) sur le moteur thermique.

Selon encore une autre caractéristique, les moyens de pilotage comprennent des moyens de supervision qui déterminent une situation du véhicule et autorisent et définissent au moins partiellement au moins un des modes de fonctionnement du système micro-hybride en tenant compte de leur détermination de la situation du véhicule et/ou de demandes externes provenant d'un système du véhicule. De préférence, les moyens de supervision comprennent des moyens pour estimer une situation du véhicule parmi au moins l'une des situations suivantes : le véhicule est dans un environnement urbain, le véhicule est sur route, le véhicule est sur autoroute.

Selon d'autres caractéristiques les moyens de supervision comprennent :

- des moyens pour autoriser et sélectionner un mode de fonctionnement en alternateur de la machine électrique tournante parmi plusieurs modes de fonctionnement en alternateur disponibles en tenant compte au moins de la situation du véhicule ; et/ou
- des moyens pour autoriser et définir un mode de fonctionnement de freinage récupératif de la machine électrique tournante ; et/ou
- des moyens pour autoriser et définir un mode de fonctionnement d'assistance en couple de la machine électrique tournante.

Selon une autre caractéristique, les moyens de pilotage comprennent des moyens de sécurité qui définissent au moins une limite de fonctionnement du système micro-hybride à partir d'une représentation interne d'au moins une partie des éléments fonctionnels du système micro-hybride et/ou d'une demande externe provenant d'un système du véhicule.

De préférence, ladite au moins une limite de fonctionnement est comprise dans les limites de fonctionnement suivantes du système micro-hybride : des valeurs minimale et maximale de plage de fonctionnement d'une composante de tension fluctuante du système micro-hybride, des valeurs de calibration / diagnostic, de protection et de sécurité de la composante de tension fluctuante, une valeur maximale d'un courant d'excitation d'un rotor de la machine électrique tournante et une valeur maximale d'un couple mécanique à prélever dans un mode de freinage récupératif de la machine électrique tournante.

De plus, ladite représentation interne couvre de préférence au moins les éléments fonctionnels suivants : la machine électrique tournante, le convertisseur alternatif-continu, le convertisseur continu-continu et les premier et second réservoirs d'énergie électrique.

Dans une forme de réalisation particulière du système micro-hybride selon l'invention, lesdits modes de fonctionnement comprennent les modes suivants :

- au moins un mode alternateur,
- au moins un mode de freinage récupératif, et
- au moins un mode d'assistance en couple.

Selon une autre caractéristique, lesdits modes de fonctionnement comprennent au moins un des cinq modes alternateur suivants :

- un mode alternateur dans lequel une composante de tension fluctuante est fixée à une valeur déterminée indiquée par une consigne ;
- un mode alternateur dans lequel la composante de tension fluctuante est fixée à une valeur optimale ;
- un mode alternateur dans lequel la consigne passe à une valeur minimale lorsque la composante de tension fluctuante mesurée atteint une valeur maximale ;
- un mode alternateur dans lequel aucune consigne n'est fixée entre des valeurs minimale et maximale de la composante de tension fluctuante ; et
- un mode alternateur mixte comprenant au moins deux des modes ci-dessus sur des plages de vitesse de fonctionnement différentes de la machine électrique tournante.

Selon encore une autre caractéristique, lesdits modes de fonctionnement comprennent au moins un des trois modes d'assistance en couple suivants :

- un mode d'assistance en couple intervenant consécutivement à un appui sur une pédale d'accélérateur du véhicule ;
- un mode d'assistance en couple intervenant sur un régime de ralenti du moteur ;
- un mode d'assistance en couple intervenant lors d'un changement de rapport dans une boite de vitesse du véhicule ; et
- un mode d'assistance en couple visant à consommer une énergie électrique stockée disponible dans au moins un des réservoirs d'énergie électrique.

Selon encore une autre caractéristique, l'un des premier et second réservoirs d'énergie électrique comprend au moins un supercondensateur.

Selon encore une autre caractéristique, le réservoir d'énergie électrique comprenant un supercondensateur alimente un réseau de bord sous une tension continue comportant une composante de tension fluctuante, et l'autre réservoir d'énergie électrique alimente un autre réseau de bord sous une tension continue sensiblement stable.

Selon encore une autre caractéristique, le module de stratégies de pilotage comporte des moyens pour fournir à un système du véhicule des informations sur des équipements externes à piloter en fonction de sa connaissance de la situation / état du véhicule.

D'autres avantages et caractéristiques de la présente invention apparaîtront plus clairement à la lecture de la description ci-dessous de plusieurs formes de réalisation particulières en référence aux dessins annexés, dans lesquels :

- la Fig.1 est un bloc-diagramme général montrant une configuration générale d'une forme de réalisation particulière du système micro-hybride selon l'invention ;
- la Fig.2 est un bloc-diagramme fonctionnel d'un module de stratégies de pilotage inclus dans une unité de commande du système micro-hybride de la Fig.1 ;
- la Fig.3 est un bloc-diagramme fonctionnel d'un bloc de supervision de véhicule inclus dans le module de stratégies de pilotage de la Fig.2 ;
- la Fig.4 montre des zones de fonctionnement du système micro-hybride correspondant à des rapports cycliques représentatifs de la consommation des réseaux électriques ;
- la Fig.5 montre des courbes donnant un taux de couple à prélever pour des fonctions de freinage récupératif ;
- les Figs.6 et 7 sont des courbes donnant des taux de couple à appliquer pour des fonctions d'assistance en couple ;
- la Fig.8 est un bloc-diagramme fonctionnel d'un bloc de sécurité de système inclus dans le module de stratégies de pilotage de la Fig.2 ;
- la Fig.9 est un graphique représentant des limitations d'une tension continue fluctuante à imposer à un réseau de tension de bord du véhicule en fonction de la température du système et dans une application considérée ;
- la Fig.10 est un graphique représentant des limites d'utilisation maximales pour des fonctions de freinage récupératif et d'assistance en couple en fonction de la température du système et dans une application considérée ; et
- la Fig.11 est un bloc-diagramme fonctionnel d'un bloc de machine d'état de système tournant inclus dans le module de stratégies de pilotage de la Fig.2.

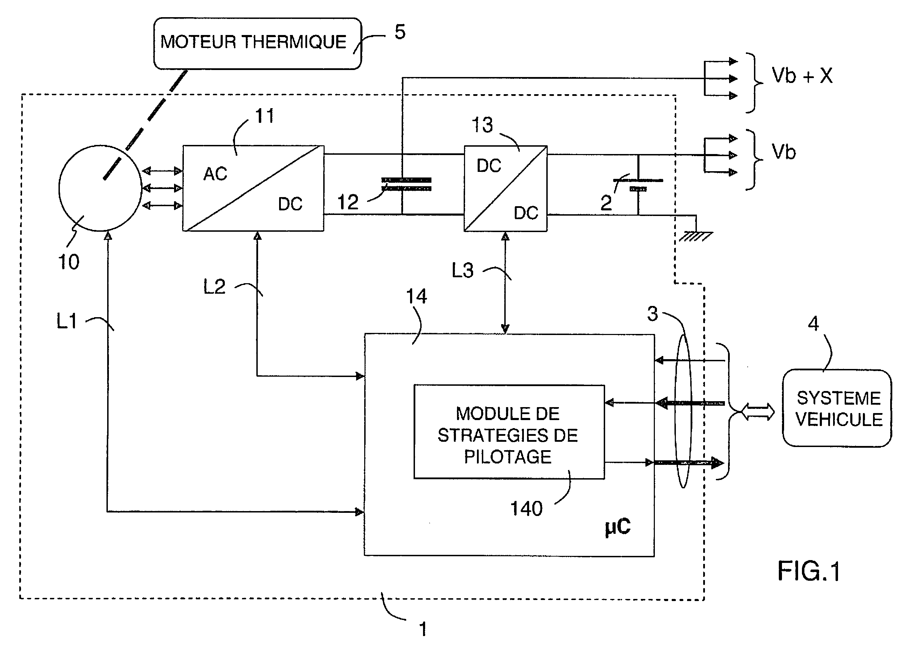

En référence plus particulièrement à la Fig.1, il est maintenant décrit de manière générale la configuration matérielle et fonctionnelle d'une forme de réalisation particulière 1 d'un système micro-hybride selon l'invention.

Comme montré à la Fig.1, dans cette forme de réalisation particulière, le système micro-hybride 1 selon l'invention comprend essentiellement une machine électrique tournante 10, un convertisseur alternatif-continu (AC/DC) réversible 11, un réservoir d'énergie électrique 12, un convertisseur de tension continu-continu (DC/DC) 13 et un micro-contrôleur 14.

Le système micro-hydride 1 est relié à un réseau de bord bi-tension du véhicule capable de fournir une tension continue basse Vb et une tension continue haute variable Vb+X.

La tension continue basse Vb est généralement celle de 12 V d'une batterie au plomb 2 équipant le véhicule. De préférence, la tension Vb pourra être utilisée pour alimenter dans le véhicule des consommateurs demandant une valeur de tension relativement stable, tels que les dispositifs d'éclairage et de signalisation.

Dans cette forme particulière de réalisation particulière, la tension continue Vb+X varie par exemple entre 12 et 60 V et est disponible aux bornes du réservoir d'énergie électrique 12 dont la charge en tension est dépendante du fonctionnement en freinage récupératif de la machine électrique tournante 10.

La tension Vb+X peut être utilisée prioritairement pour alimenter des consommateurs acceptant une tension variable tels que par exemple un dispositif de dégivrage. Cependant, dans certaines applications, la tension Vb+X pourra aussi être utilisée pour alimenter, à travers un convertisseur DC-DC dédié (non représenté), un consommateur demandant une tension continue stable, par exemple un dispositif autoradio alimenté sous 12 V. De plus, la tension Vb+X dans certaines applications est aussi utilisable pour alimenter avec une tension supérieure à 12 V la machine électrique tournante 10 fonctionnant en mode démarreur ou moteur.

Comme cela est représenté à la Fig.1, la machine électrique tournante 10 est couplée mécanique, liaison 101, à un moteur thermique 5 du véhicule. La machine 10 est une machine de type alterno-démarreur qui est ici de type triphasé et qui est apte à fonctionner également en mode de freinage récupératif et en mode d'assistance en couple. Dans le mode d'assistance en couple, la machine 10 fournit un couple mécanique additionnel pour la traction du véhicule en complément de celui fourni par le moteur thermique 5.

Le convertisseur AC/DC 11 est un dispositif réversible et permet, lorsque la machine électrique tournante 10 doit fonctionner en mode moteur, une alimentation de la machine 10 avec des tensions alternées triphasées obtenues à partir d'une tension continue présente aux bornes du réservoir d'énergie électrique 12, et, lorsque la machine électrique tournante 10 doit fonctionner en mode alternateur, un redressement sous la forme d'une tension continue redressée des tensions triphasées fournies par la machine 10. Cette tension continue redressée charge le réservoir d'énergie électrique 12 et, à travers le convertisseur DC-DC 13, la batterie 2.

Le réservoir d'énergie électrique 12 est ici un pack de condensateurs de très forte capacité. Ces condensateurs sont habituellement appelés «ucap» ou «supercondensateur» par les hommes du métier. Le réservoir 12 est désigné simplement supercondensateur 12 dans la suite de la description. Le supercondensateur 12 autorise, en se chargeant à la tension continue délivrée par le convertisseur AC/DC 11, un stockage d'énergie électrique lorsque la machine électrique tournante 10 fonctionne en mode de freinage récupératif ou en mode alternateur. L'énergie stockée dans le supercondensateur 12 peut être restituée sur le réseau de tension Vb+X pour alimenter différents consommateurs et , dans certains cas, sur le réseau de tension Vb, à travers le convertisseur DC/DC 13, par exemple lorsque la machine 10 ne débite pas et que la batterie 2 est incapable de répondre à une sollicitation de pic de courant sur le réseau de tension Vb. De plus, l'énergie stockée dans le supercondensateur, comme déjà indiqué plus haut, peut être utilisée pour un démarrage du moteur thermique 5 ou une assistance en couple de celui-ci sous une tension Vb+X qui peut être très sensiblement supérieure aux 12 V classiques, facilitant ainsi une fourniture par la machine tournante 10 de couples mécaniques importants requis dans le cas de gros moteurs thermiques.

Le convertisseur DC/DC 13 est un dispositif réversible et permet, d'une part, un transfert d'énergie vers le réseau de tension Vb pour alimenter les consommateurs et charger la batterie 2 et, d'autre part, un transfert d'énergie dans le sens inverse à partir de la tension 12V de la batterie 2 pour charger le supercondensateur 12 si nécessaire et alimenter le convertisseur AC/DC 11 lorsque la machine tournante 10 fonctionne en moteur / démarreur.

Le micro-contrôleur 14 gère le fonctionnement du système micro-hybride 1 à partir d'informations représentatives de l'état interne du système micro-hybride 1 et de l'état du véhicule. Un module de stratégies de pilotage 140, décrit en détails plus bas dans la description, est implémenté dans le micro-contrôleur 14 de manière à piloter le système micro-hybride 1 en tenant compte de l'état interne de celui-ci et de l'état du véhicule Des informations d'état et des commandes peuvent ainsi être échangées entre le micro-contrôleur 14 et différents éléments fonctionnels du système micro-hybride 1 à travers des liaisons d'échange de signaux. Des liaisons d'échange de signaux L1, L2 et L3 entre le micro-contrôleur 14 et les éléments 10, 11 et 13 sont représentées à titre d'exemple à la Fig.1.

Comme montré aussi à la Fig.1, un bus de communication de données 3, par exemple de type CAN, est également prévu pour les échanges d'information entre le système micro-hybride 1 et le système 4 du véhicule. Des informations telles qu'un appui sur la pédale de frein ou sur la pédale d'accélérateur peuvent ainsi être transmises au système micro-hybride 1 par le système de véhicule 4 à travers le bus de communication de données 3.

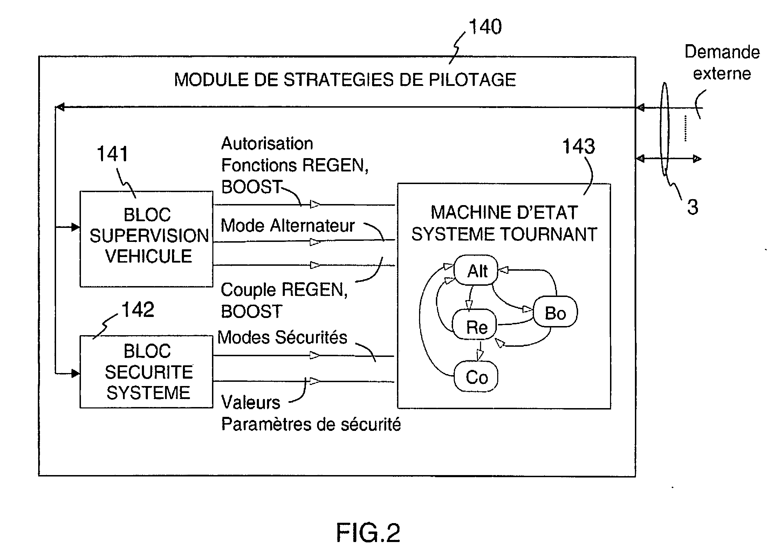

En référence aux Figs.2 à 5, il est maintenant décrit en détail le module de stratégies de pilotage 140 du système micro-hybride 1 selon l'invention.

Conformément à l'invention, le module de stratégies de pilotage 140 pilote la machine électrique tournante 10 en mode alternateur en fonction des consommations respectives des réseaux de bord de Vb+X et Vb et de la situation du véhicule, par exemple, si le véhicule circule en zone urbaine ou sur route.

Dans cette forme de réalisation particulière de l'invention, les hypothèses suivantes sont adoptées :

1 - Si une ou plusieurs charges du coté Vb+X requiert une tension particulière pour fonctionner, il est supposé que cette valeur de tension est imposée par une demande externe du système de véhicule 4 au module de stratégies de pilotage 140 et elle est prise en compte en priorité.

2 - Le module de stratégies de pilotage 140 a accès a suffisamment de données pertinentes pour avoir un modèle interne fiable du véhicule. Dans le cas contraire, on supposera que les modes de fonctionnement seront imposés par une demande externe ou qu'il y a un mode de défaut.

3 - Les grandeurs de commande, à savoir les rapports cyclique du convertisseur AC/DC 11 en mode onduleur et du convertisseur DC/DC 13, sont représentatives de la consommation des réseaux électriques de bord Vb et Vb+X.

4 - Des cartographies de la machine électrique tournante 10 sont disponibles et donnent pour les différentes valeurs de la composante de tension fluctuante X de la tension Vb+X :

le couple mécanique prélevé sur l'arbre du moteur thermique 5 : $C1_{méca}=CREGEN(X, \delta_1\%, N_{machine})$ ;
le couple mécanique fournie à l'arbre du moteur thermique 5 : $C2_{méca}=CBOOST(X, \delta_1\%, N_{machine})$ ;
le courant débité sur le réseau Vb+X : $I_X=CDEBIT(X, \delta_1\%, N_{machine})$ ;
le courant d'excitation correspondant : $I_{ex}=PWM(X, \delta_1\%)$.

Où CREGEN, CBOOST correspondent respectivement aux cartographies pour la fonction de freinage récupératif désignée REGEN et la fonction d'assistance en couple désignée BOOST. De manière générale, les fonctions de freinage récupératif et d'assistance en couple sont désignées REGEN et BOOST dans toute la suite de la description.

Où CDEBIT et PWM correspondent respectivement aux cartographies pour le débit en courant $I_X$ de la machine 10 en mode alternateur et pour le courant d'excitation $I_{ex}$ à fournir au rotor de la machine 10 sous une forme modulée en largeur d'impulsion (PWM) dans cette forme de réalisation particulière.

Ou $\delta_1$% représente le rapport cyclique du courant d'excitation $I_{ex}$ parcourant le rotor de la machine 10.

Par analogie, on notera pour la suite de la description que $\delta_2$% est le rapport cyclique du convertisseur DC/DC 13 entre les tensions Vb+X et la tension Vb.

Comme montré à la Fig. 2, le module de stratégies de pilotage 140 comporte notamment deux blocs 141 et 142 qui ont la charge d'établir des paramètres utilisés dans les automates de décision inclus dans le module et un bloc 143 qui est un bloc de machine d'état du système tournant (machine électrique tournante 10).

Le bloc 141 désigné SUPERVISION VEHICULE détermine l'environnement du véhicule et définit l'utilisation de modes alternateur désignés mode 1, mode 1 bis, mode 2, mode 2bis de la machine 10. Bien entendu, l'invention ne se limite pas aux quatre modes alternateur ci-dessus et, selon les applications, pourra inclure d'autres modes en nombre inférieur ou. Conformément à l'invention, toute combinaison des modes alternateur décrits ci-dessous est possible. Le bloc 141 a aussi la charge de générer les demandes de freinage récupératif d'origine interne en fonction de sa connaissance du véhicule ou d'origine externe pour un mode esclave piloté par le système de véhicule 4. Le bloc 141 est également apte à gérer des demandes externes pour des points de fonctionnement particuliers.

Le bloc 142 désigné SUPERVISION SECURITE SYSTEME définit des limites de fonctionnement du système. Pour cela, il se base sur une représentation interne de chaque sous-système ou sur une demande externe.

BLOC SUPERVISION VEHICULE 141

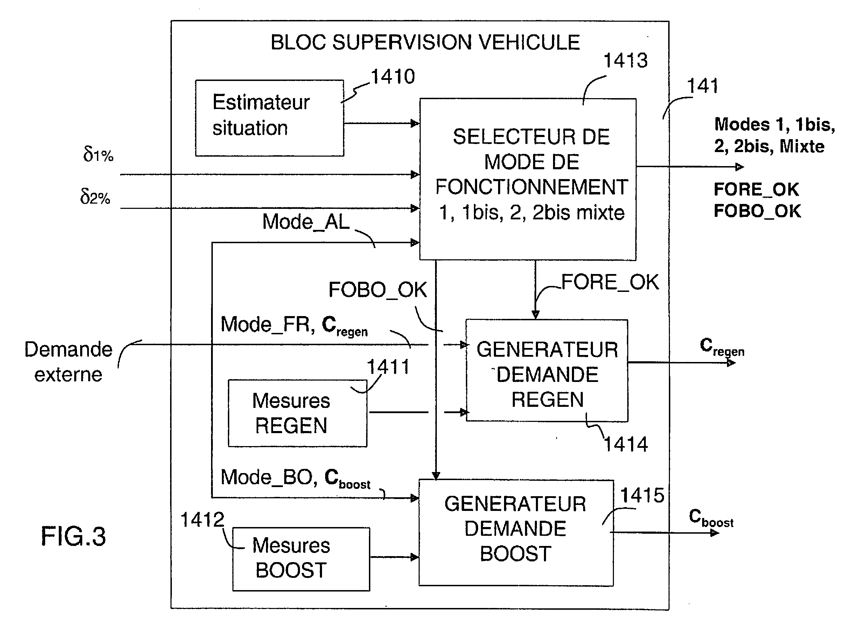

En référence plus particulièrement aux Figs.3 à 7, le bloc SUPERVISION VEHICULE 141 est maintenant décrit de manière détaillée.

Le bloc 141 comprend essentiellement des sous-blocs fonctionnels 1410, 1411, 1412, 1413, 1414 et 1415.

Il est également prévu dans le bloc 141 un sous-bloc (non représenté) pour la gestion des demandes externes qui sont transmises aux sous-blocs 1413, 1414 et 1415.

Les demandes externes comprennent de manière non limitative : une demande de mode alternateur particulier, une demande de freinage récupératif et une demande d'assistance en couple.

Le module de stratégies de pilotage 140 autorise donc des modes autonomes pour lesquels il détermine lui-même les modes de fonctionnement et des modes esclaves pour lesquels le système de véhicule 4 décide lui-même des paramètres à appliquer.

Sorties du bloc 141

Modes de fonctionnement :

Mode 1 : mode alternateur continu à une tension fixe

Mode 1 bis : mode alternateur continu à la tension optimale

Mode 2 : mode alternateur alterné entre deux valeurs $X_{min}$ et $X_{max}$ de la composante de tension fluctuante X de la tension Vb+X

Mode 2bis : mode alternateur alterné par actions sur les fonctions REGEN et BOOST

Mode mixte : autorisation des modes 1, 1 bis, 2, 2bis sur certaines plages de régimes

Drapeaux d'autorisation :

FORE_OK : mode freinage récupératif autorisé ou pas

FOBO_OK : mode boost autorisé ou pas

Consigne de couplée :

$C_{regen}$ : couple REGEN instantané

$C_{boost}$ : couple BOOST instantané

Entrées du bloc 141

- $\delta_1$% représente le rapport cyclique du courant d'excitation $I_{ex}$ du rotor, qui pour une valeur de la composante de tension fluctuante X donnée, est représentatif de la consommation du réseau Vb+X.

- $\delta_2\%$ représente le « rapport cyclique » du convertisseur DC/DC 13, qui pour des valeurs de composante de tension fluctuante X et de tension et Vb données, est représentatif de la consommation du réseau Vb.

- Demande externe du système de véhicule 4 :

  ○ Mode_FR : Mode de freinage récupératif

  ■ Mode_FR = 0 : mode autonome
  ■ Mode_FR = 1 : mode esclave

  ○ Mode_BO : Mode de fonctionnement en assistance en couple (boost)

  ■ Mode_BO = 0 : mode autonome
  ■ Mode_BO = 1 : mode esclave

  ○ Mode_AL: Mode de fonctionnement alternateur

  ■ Mode_AL = 0 : mode autonome
  ■ Mode_AL = 1 : mode esclave

  ○ Commande de couple $C_{regen}$
  ○ Commande de couple $C_{boost}$
  ○ Paramètres du mode alternateur (ALTER) imposé

Sous-bloc 1410 : Estimateur de situation véhicule

La charge du sous-bloc 1410 est de déterminer si le véhicule est en ville, sur route ou sur autoroute. Différentes stratégies de détection peuvent être utilisées et devront être choisies par l'homme du métier en fonction des applications. Dans un mode totalement esclave, ce bloc 1410 donne la possibilité au superviseur de véhicule de piloter des stratégies de « haut niveaux ».

Sous-bloc 1411 : Mesures de mode REGEN

La charge de ce sous-bloc 1411 est de centraliser toutes les mesures jugées utiles pour générer correctement une demande REGEN. Cela inclut entre autres :

- la vitesse de rotation du vilebrequin du moteur thermique 5 (qui peut être estimée par la vitesse de la machine 10)
- le rapport engagé de la boite de vitesse du véhicule
- le statut de l'embrayage du véhicule (soit par la boite de vitesse, soit par la pédale d'embrayage)
- la position de la pédale d'accélérateur du véhicule (pour la détection d'un frein moteur)
- la position de la pédale de frein du véhicule (pour la détection d'un frein mécanique)
- la vitesse linéaire du véhicule
- l'information « coupure d'injection » si elle est disponible dans le véhicule.

Sous-bloc 1413: Sélecteur de mode de fonctionnement

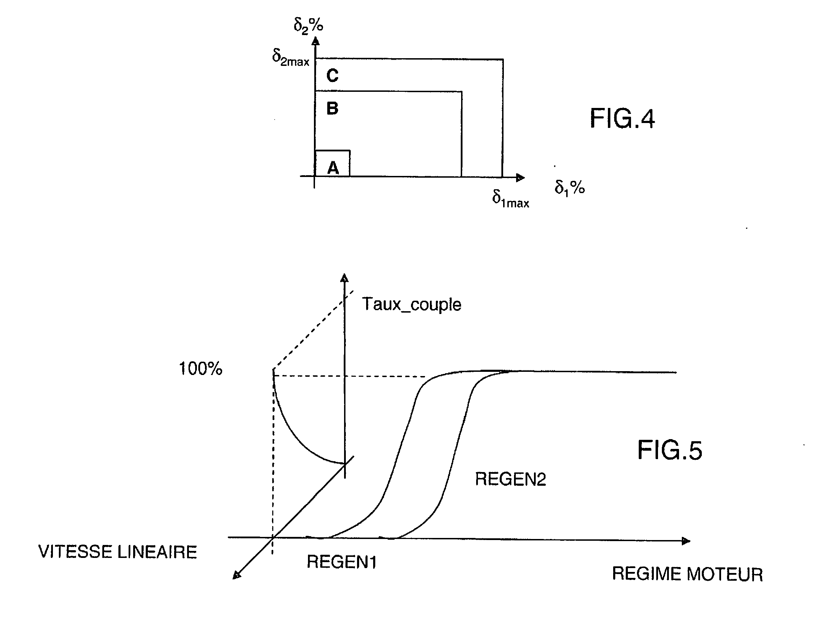

Ce sous-bloc 1413 se base sur les informations ville, route, autoroute et la consommation électrique ou demande externe pour imposer un mode de fonctionnement alternateur. Dans cette forme de réalisation particulière, 4 modes de fonctionnement alternateur sont disponibles, à savoir : 2 modes permanents et 2 modes alternés. A ces 4 modes peut s'ajouter un mode mixte alternant entre les modes alternateur 1 x et 2x selon un critère dépendant de la plage de vitesse de la machine. Ces modes sont décrits de manière plus précise dans la suite de la description.
En mode de fonctionnement autonome, la système choisit le « meilleur» mode alternateur en fonction de la situation du véhicule et de sa consommation électrique représentée par les variables de commande $\delta_1\%$ et $\delta_2\%$, respectivement pour le convertisseur AC/DC 11 en mode onduleur et le convertisseur DC/DC 13. Dans d'autres formes de réalisation, la seule prise en compte des consommations est aussi possible
Le mode esclave alternateur (Mode_AL=1) impose, un mode alternateur défini par les paramètres ALTER.
Comme montré à la Fig.4, de manière schématique, on peut définir plusieurs zones A, B et C correspondant à des niveaux de consommation différents. On notera que le nombre de zones et la forme des séparations montrés à la Fig.4 ne sont pas limitatifs. Dans cette figure, $\delta_{1max}$ est fonction de la température de la machine 10 et de son électronique et $\delta_{2max}$ est fonction de la température du convertisseur DC/DC 13. De plus, les zones peuvent éventuellement faire intervenir d'autres paramètres que la consommation respective des réseaux tels que le régime du moteur thermique 5 ou la puissance mécanique déjà prélevée sur l'arbre du moteur thermique 5.

Selon l'environnement détecté, certaines fonctions peuvent être inhibées et un mode de fonctionnement imposé.

Par exemple, on peut définir en ville :

| Zone | Fonction REGEN | Fonction BOOST | Mode |
|---|---|---|---|
| A | FORE_OK=faux | FOBO_OK=faux | Mode 1 bis |
| B | FORE_OK=Vrai | FOBO_OK=vrai | Mode 1 |
| C | FORE_OK= Vrai | FOBO_OK=faux | Mode 1 bis |

Par exemple, on peut définir sur route et autoroute :

| Zone | Fonction REGEN | Fonction BOOST | Mode |
|---|---|---|---|
| A | FORE_OK=Vrai | FOBO_OK=vrai | Mode 1 bis ou 2bis |
| B | FORE_OK=Vrai | FOBO_OK=vrai | Mode 2 |
| C | FORE_OK=Vrai | FOBO_OK=faux | Mode 1 bis |

Cela vient essentiellement de considération thermique pour les supercondensateurs pour lesquelles on suppose un refroidissement plus facile sur route et sur autoroute.

Les tableaux ci-dessus sont des exemples qui bien entendu ne sont nullement limitatifs, les solutions retenues, le nombre de zones et les formes de ces zones dépendant pour beaucoup des configurations des véhicules. Ainsi, dans certaines formes de réalisation, il peut être prévu un mode alternateur alterné (2 ou 2bis) aussi en ville, dans certaines zones.

Sous-bloc 1414 : Générateur de demande REGEN

Ce bloc 1414 a la charge de générer les demandes de REGEN.

Pour toutes les fonctions électriques (REGEN et BOOST), le module 140 avertit le système du véhicule ou du moteur thermique 5 du couple qu'il prélève ou fournit sur l'arbre du moteur thermique 5 afin que celui-ci adopte son comportement.

La fonction REGEN s'exprime, selon les formes de réalisation, en couple à prélever sur l'arbre du moteur thermique 5 ou en puissance électrique récupérée. Dans la suite de la description, on supposera que la valeur fournie comme paramètre est un couple à prélever sur l'arbre du moteur thermique 5. De préférence, la valeur du paramètre « couple à prélever » pourra être actualisée par le donneur d'ordre externe autant de fois que nécessaire, jusqu'à la complétude de la mission.

En cas de défaillance du sous-bloc 1411, un mode dégradé esclave peut être immédiatement imposé si le système ne présente pas de défaillance composants.

Le sous-bloc 1414 dispose, d'une valeur maximale du couple à prélever appelée $C_{max\_dispo}$. Ce couple maximal correspond à la valeur maximale du couple que la machine 10 est capable de prélever sur l'arbre du moteur thermique 5. Il correspond donc aux courbes de débit maximum de la machine 10 fonctionnant en alternateur pour différentes valeurs de la composante de tension fluctuante X .

*Cas des demandes externes*

Typiquement, dans cette forme de réalisation, le comportement du sous-bloc 1414 est le suivant :

Mode autonome (Mode_FR=0) :

$C_{regen}$ = 0 => gestion par le système

$C_{regen}$ > 0 => priorité à la demande externe sur la valeur calculée par le module 140.

Mode esclave (Mode_FR=1) :

$C_{regen}$ = 0 => pas de freinage récupératif

$C_{regen}$ > 0 => cas normal

*Cas des demandes internes*

A tout moment et même en mode autonome, un donneur d'ordre externe peut demander une phase de REGEN qui prendra la main sur le calcul interne.

Le calcul interne donne comme résultat un pourcentage du couple $C_{max\_dispo}$.

REGEN1

Les conditions logiques suivantes autorisent le mode REGEN1 :

- pédale de frein non activée (ou position inférieure à un certain seuil)
- ET (pédale d'accélérateur non activée OU vitesse négative de la pédale inférieure à un certain seuil négatif)
- ET embrayage fermé
- ET rapport de boite de vitesse > 1
- ET régime moteur > seuil paramétrable.

REGEN2

Les conditions logiques suivantes autorisent le mode REGEN2 :

- pédale d'accélérateur > seuil paramétrable
- ET (embrayage ouvert ou rapport de boite sur neutre)
- ET (régime moteur > seuil paramétrable ou régime stabilisé pendant une certaine durée)

On notera que le mode REGEN2 peut être utile pour recharger les supercondensateurs sur un haut régime stabilisé, par exemple au dessus de 4000 tr/min. Ce mode peut être facilement désactivable en mettant des seuils inatteignables. Ce mode est un mode alternateur particulier. Ce n'est pas un mode de freinage récupératif à proprement parler.

Par ailleurs, on notera que d'autres conditions pourront être utilisées pour traquer d'autres phases utiles. Par exemple, pour limiter des prélèvements de couple trop importants lors de la définition d'un mode REGEN sur les accélérations détectées. On notera également qu'après le premier démarrage, la composante de tension fluctuante X est définie à $X_{min}$ en attendant de pouvoir utiliser les fonctions élaborées de gestion de l'énergie.

Dans cette forme de réalisation particulière, le mode REGEN est une combinaison OU logique de tous les sous-modes : REGEN_OK = REGEN1 OU REGEN2.

De manière générale, comme cela apparaît dans les courbes de la Fig.5, si les conditions d'application du mode REGEN sont satisfaites, le pourcentage du couple maximal à appliquer dépend essentiellement du régime moteur, mais aussi de la vitesse linéaire du véhicule. Le couple de freinage récupératif à appliquer est donné par : $C_{regen}$ = Taux_couple $^*$ $C_{max\_dispo}$.

La limitation en couple a pour but de rendre transparent le mode de freinage récupératif lorsque le régime moteur devient trop bas et que le risque d'étouffer le moteur augmente.

Sous-bloc 1412 : Mesures BOOST

De la même manière que le sous-bloc 1411 définit les mesures nécessaires pour construire les ordres de REGEN, la charge de ce sous-bloc 1412 est de centraliser toutes les mesures jugées utiles pour générer correctement une demande BOOST d'assistance en couple. Cela inclut entre autres :

- la vitesse de rotation du vilebrequin (qui peut être estimée par la vitesse de la machine 10)
- le rapport engagé de boite de vitesse
- le statut de l'embrayage (soit par la boite de vitesse, soit par la pédale d'embrayage)

- la position de la pédale d'accélérateur (pour la détection d'une demande d'accélération)
- la position de la pédale de frein (pour sécuriser ce mode actionneur)
- la vitesse linéaire du véhicule
- l'information « coupure d'injection » si elle est disponible (pour sécuriser ce mode actionneur).

Les mesures sont, à une symétrie prés, les mêmes que celles utilisées pour la fonction REGEN.

Sous-bloc 1415 : Générateur de demande BOOST

De manière générale, Il existe plusieurs phases de fonctionnement du véhicule dans lesquelles une assistance BOOST par un couple électrique peut être utile. Les trois cas les plus classiques sont les suivants:

1 - Lorsque le conducteur appuie sur la pédale d'accélérateur afin d'augmenter la vitesse linéaire de son véhicule sans changer de rapport de boite de vitesse. Suivant la valeur du couple électrique fourni, l'assistance (ou l'absence d'assistance) électrique peut éventuellement être détectée par le conducteur.

2 - L'assistance de régime ralenti : dans les cas où l'on dispose de suffisamment d'énergie et qu'il y a relativement peu de consommateurs, on peut assister le moteur thermique 5 afin qu'il diminue sa consigne de régime ralenti et/ou la quantité de carburant injecté.

3 - L'assistance de passage de vitesse : Il s'agit d'une fonction d'agrément qui peut s'activer lorsque le conducteur change de rapport de boite de vitesse pour un rapport plus élevé : au collage de l'embrayage, le couple résistant lié au véhicule (couple à la roue, vitesse du véhicule, etc.) vient freiner le moteur. Il peut se produire alors une baisse de régime qu'il est possible de limiter grâce à ce mode de fonctionnement.

Au trois cas ci-dessus s'ajoute un mode de consommation électrique (BOOST_CONSO) pour réduire la quantité d'énergie stockée dans le supercondensateur. Conformément à ce mode, sur régime stabilisé et avec une transition progressive sur un temps suffisamment long, on peut appliquer un couple positif dont l'amplitude dépend de différentes conditions et qui ne doit pas être détectable par le conducteur.

Concernant, le sous-bloc 1415 de générateur de demande BOOST, ce sous-bloc a la charge de générer les demandes de BOOST. Il existe plusieurs situations qui peuvent demander un fonctionnement en mode moteur de la machine 10. On distingue les situations internes de consommation électrique afin de diminuer la quantité d'électricité stockée (cas assez rare) et les situations où l'on assiste le moteur thermique 5 en lui fournissant un couple mécanique soit pour l'aider à accélérer soit pour lui permettre de diminuer les quantités injectées de carburant (ce dernier cas suppose que le contrôle du moteur thermique 5 ait une précision importante sur des transitoires de régime).

Pour toutes les fonctions électriques (REGEN et BOOST), le module 140 avertit le superviseur du véhicule ou celui du moteur thermique 5 du couple qu'il prélève ou fournit sur l'arbre du moteur thermique 5 afin que celui-ci adopte son comportement.

La fonction BOOST s'exprimera, selon les applications de l'invention, en couple à fournir à l'arbre du moteur thermique 5, en puissance mécanique à fournir ou en pourcentage du couple maximal disponible. Dans la suite de la description, on supposera sans que la valeur fournie en paramètre est un couple à fournir à l'arbre du moteur thermique 5.

Selon les formes de réalisation, la valeur du couple à fournir pourra être actualisée par le donneur d'ordre externe à chaque fois que cela est nécessaire, jusqu'à la complétude de la mission.

En cas de défaillance du sous-bloc 1412, un mode dégradé esclave peut être immédiatement imposé si le système ne présente pas de défaillance composants.

Le sous-bloc 1415 dispose, d'une valeur maximale du couple qu'il peut fournir appelée $C_{max\_dispo}$. Ce couple maximal correspond à la valeur maximale du couple que la machine est capable de fournir à l'arbre du moteur thermique 5. Il correspond donc aux courbes de couple maximal de la machine 10 fonctionnant en mode moteur pour différentes valeurs de la composante de tension fluctuante X.

*Cas des demandes externes*

Typiquement, dans cette forme de réalisation, le comportement du sous-bloc 1415 est le suivant :

Mode autonome (Mode_BO=0):

$C_{boost}$ = 0 => gestion des assistances en couple BOOST par le système
$C_{boost}$ > 0 => priorité à la demande externe sur la valeur calculée par

le système

Mode esclave (Mode_BO=1) :

$C_{boost}$ = 0 => pas d'assistance en couple BOOST
$C_{boost}$ > 0 => cas normal

*Cas des demandes internes*

A tout moment et même en mode autonome, un donneur d'ordre externe peut demander une phase d'assistance BOOST qui prendra la main sur le calcul interne. Le calcul interne donne comme résultat un pourcentage du couple $C_{max-dispo}$ à appliquer.

BOOST1

Les conditions logiques suivantes autorisent le mode BOOST1 :

- pédale de frein non activée (ou position inférieure à un certain seuil)
- ET pédale d'accélérateur < certain seuil
- ET vitesse d'appuie sur pédale accélérateur > certain seuil
- ET embrayage fermé
- ET rapport de boite de vitesse >= 1
- ET vitesse linéaire du véhicule < seuil paramétrable.

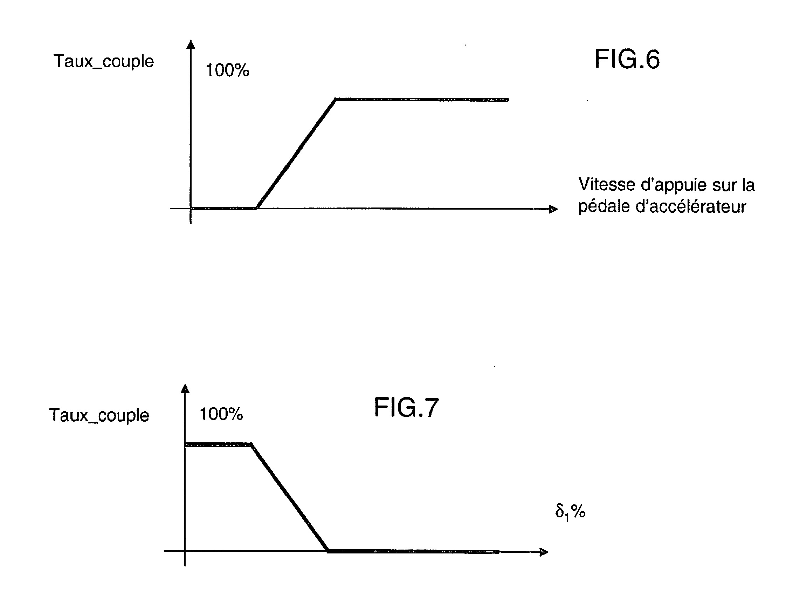

On notera que ce mode particulier permet de fournir un couple lorsqu'une accélération est demandée.
Dans ce cas, le pourcentage du couple maximal disponible à fournir obéit à une loi prédéterminée telle que celle montrée à titre d'exemple à la Fig.6.

BOOST2

Les conditions logiques suivantes autorisent le mode BOOST2 :

- pédale d'accélérateur non activée (ou inférieure à un certain seuil)
- ET (embrayage complètement ouvert ou rapport de boite sur neutre)
- ET régime ralenti stabilisé pendant une certaine durée.

On notera que le système 1 peut intervenir en assistance en couple au ralenti afin de permettre de diminuer les quantités de carburant à injecter. Pour que ce mode reste transparent vis-à-vis du conducteur, il est préférable que le système du véhicule soit informé du couple fourni par le système 1 ou que le couple d'assistance de ralenti soit appliqué avec une boucle de régulation au moins 10 fois plus lente que la gestion du couple thermique.
Dans ce cas, le pourcentage du couple maximal disponible à fournir est dépendant du niveau de consommation et obéit à une loi prédéterminée telle que celle montrée à titre d'exemple à la Fig.7.

BOOST CONSO1

Les conditions logiques suivantes autorisent un mode BOOST_CONSO1 :

- pédale de frein non activée (ou position inférieure à un certain seuil)
- ET pédale d'accélérateur activée > certain seuil
- ET embrayage fermé
- ET rapport de boite de vitesse >= 2
- ET vitesse linéaire du véhicule > certain seuil

On notera que ce mode particulier permet de diminuer la tension du réseau Vb+X lorsque le véhicule est roule au dessus d'une certaine vitesse. Ce mode ne doit pas être détectable, c'est pourquoi le couple qui sera appliqué est un couple limité. Conformément à l'invention, plusieurs approches sont possibles pour déterminer ce couple.
Par exemple, le couple appliqué peut être constant et dépendant de paramètres système ou peut être variable selon d'autres considérations comme par exemple la vitesse du moteur thermique 5 :

$$Taux\_couple = \frac{N_{vide}(p) - N_{mes}}{N_{vide}(p) - N_{ralenti}}$$ où $N_{vide}(p)$ est la vitesse stabilisée du moteur thermique 5 correspondant à la position p de la pédale d'accélérateur lorsque le moteur thermique 5 est à vide.

*Couple appliqué Cboost*

Le mode CONSO pilote l'autorisation du BOOST_CONSO1 dans l'équation logique qui suit. Le pourcentage appliqué dépend du mode consommation autorisé mais l'autorisation de l'assistance en couple est donnée par le drapeau :

BOOST_OK = BOOST1 OU BOOST2 OU [BOOST_CONSO1 ET CONSO]

Et le couple appliqué est :

$C_{boost}$ = Taux_couple * $C_{max\_dispo}$

BLOC SECURITE SYSTEME 142

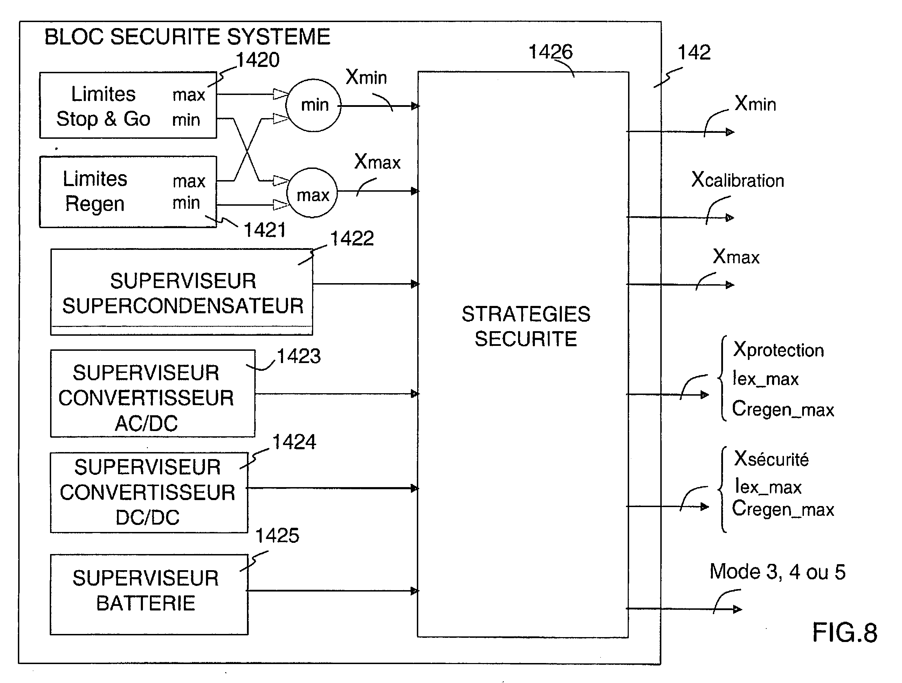

En référence plus particulièrement aux Figs.8 à 10, le bloc SECURITE SYSTEME 142 est maintenant décrit de manière détaillée.

Ce bloc 142 permet d'imposer des limites de fonctionnement sur la tension du réseau Vb+X en fonction de l'état interne du système micro-hybride 1.

Toutes les fonctions connues pouvant être disponibles dans des systèmes alterno-démarreur peuvent être concernées par ce bloc fonctionnel 142, à savoir : la fonction ARRÊT/MARCHE (STOP&GO), les fonctions ALTERNATEUR, REGEN, BOOST, et la fonction CONVERTISSEUR DC/DC. Il est rappelé ici que la fonction arrêt/marche désignée Stop & Go dans la suite de la description coupe le moteur thermique 5 sous certaines conditions et le redémarre automatiquement par exemple lors d'un appui sur la pédale d'accélérateur ou de l'engagement d'une vitesse.

Sorties du bloc 142

Valeur minimale de la plage de fonctionnement : $X_{min}$
Valeur de tension pour les calibrations / diagnostic : $X_{calibration}$
Valeur maximale de la plage de fonctionnement : $X_{max}$
Valeurs de protection : Xprotection, $I_{ex\_max}$, $C_{regen\_max}$
Valeurs de sécurité : $X_{sécurité}$, $I_{ex\_max}$, $C_{regen\_max}$
Mode 3 = protection (logique booléenne)
Mode 4 = sécurité (logique booléenne)
Mode 5 = calibration / diagnostic (logique booléenne)

Sous-bloc 1420 : Limites MARCHE/ARRÊT

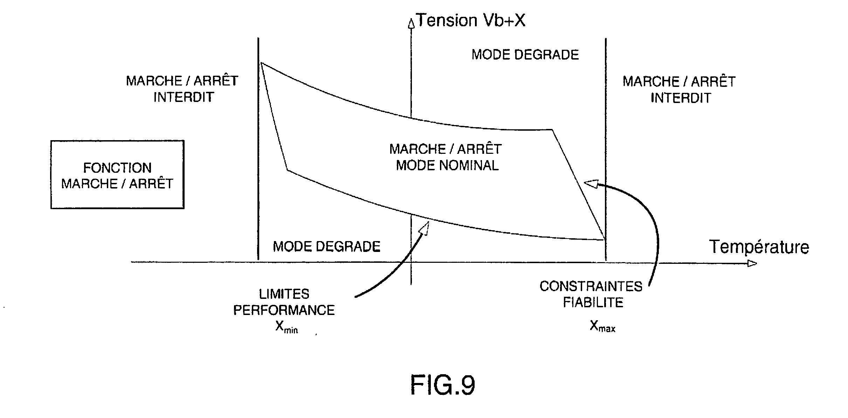

Ce sous-bloc 1420 traduit les limitations de la tension à imposer au réseau en fonction de la température du système et dans l'application considérée. Se référer à la Fig.9. Schématiquement, sans que cela soit restrictif quant à la portée de l'invention, une limite inférieure correspond à la tension minimale de fonctionnement nominal (par exemple, être capable de réaliser un certain test comme entraîner le moteur thermique 2 fois pendant 1 seconde). Une limite supérieure correspond généralement à une limite de fiabilité par exemple, sur le courant maximal admissible par le convertisseur AC/DC 11.

Sous-bloc 1421 : Limites REGEN

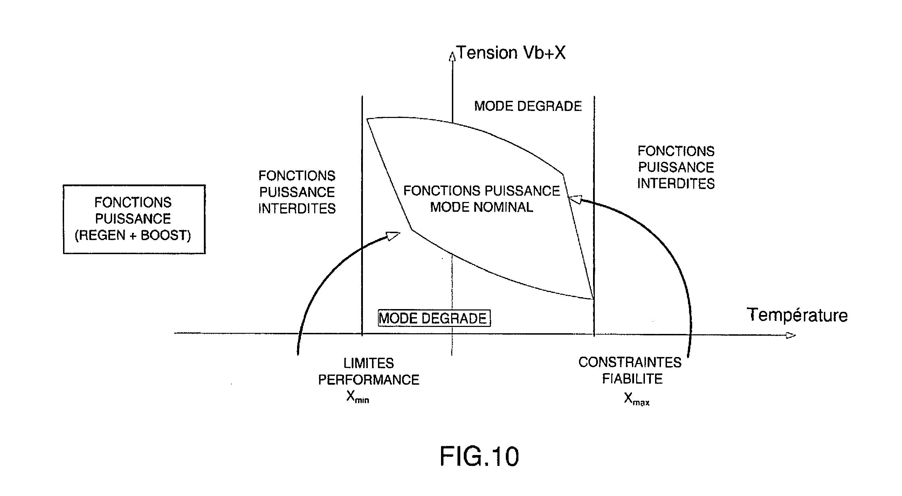

De manière analogue au sous-bloc 1421, ce sous-bloc 1421 traduit les limites d'utilisation maximales pour les fonctions REGEN et BOOST en fonction de la température du système et dans l'application considérée. Se référer à la Fig.10. Schématiquement, sans que cela soit limitatif, une limite inférieure correspond à la tension minimale de fonctionnement nominal en mode BOOST (par exemple, être capable de réaliser un certain test comme entraîner le moteur thermique en mode BOOST pendant 1 seconde puis un essai de redémarrage de 1 seconde). La limite supérieure correspond généralement à une limite de fiabilité liée à la fonction REGEN.

Sous-bloc 1422 : Superviseur SUPERCONDENSATEUR

Le sous-bloc 1422 est un superviseur et a pour fonction de définir le niveau fonctionnel du supercondensateur 12. Il peut imposer un mode calibration / diagnostic et donc imposer un point de fonctionnement particulier.
Le sous-bloc 1422 préconise les valeurs des paramètres fonctionnels et les états d'activation des fonctions lorsque le composant dont il s'occupe n'est pas en état de fonctionner.

Sous-bloc 1423 : Superviseur MACHINE 10 / CONVERTISSEUR AC/DC 11

Le sous-bloc 1423 est un superviseur qui a à charge de définir le niveau fonctionnel du convertisseur AC/DC 11 et de la machine 10. Il peut imposer un mode calibration / diagnostic et donc imposer un point de fonctionnement particulier. Il préconise les valeurs des paramètres fonctionnels et les états d'activation des fonctions lorsque le composant dont il s'occupe n'est pas en état de fonctionner.

Sous-bloc 1424 : Superviseur Convertisseur DC/DC 13

Le sous-bloc 1424 est un superviseur qui a à charge de définir le niveau fonctionnel du convertisseur DC/DC 13. Il peut imposer un mode calibration / diagnostic et donc imposer un point de fonctionnement particulier. Il préconise les valeurs des paramètres fonctionnels et les états d'activation des fonctions lorsque le composant dont il s'occupe n'est pas en état de fonctionner.

Sous-bloc 1425 : Superviseur batterie 2

Le sous-bloc 1425 est un superviseur qui a à charge de définir le niveau fonctionnel de la batterie. Il peut imposer un mode calibration / diagnostic et donc imposer un point de fonctionnement particulier. Il préconise les valeurs des paramètres fonctionnels et les états d'activation des fonctions lorsque le composant dont il s'occupe n'est pas en état de fonctionner.

Sous-bloc 1426 : Stratégies de sécurité pour Vb+X

Le sous-bloc 1426 se base sur les états fonctionnels des sous-ensembles pour autoriser ou inhiber certaines fonctions ou leurs niveaux fonctionnels.
Il est supposé ici que les superviseurs permettent de définir 3 types de modes :

- mode OK correspondant à un niveau fonctionnel normal de classe A
- mode dégradé : correspondant à des modes de fonctionnement de classe B et classe C
- mode KO : correspondant à des modes de fonctionnement de classe D et classe E

Par défaut, les modes de sécurité et de protection sont désactivés (OFF). En cas d'activation du mode 3 dit de protection, la consigne appliquée est $X_{protection}$ si il n'y a pas de demande externe. En cas d'activation du mode 4 dit de sécurité, la consigne appliquée est $X_{sécurité}$ même s'il y a une demande externe. Les équations logiques qui donnent les valeurs des deux drapeaux correspondants peuvent être :

PROTECTION = mode dégradé SUPERCONDENSATEUR
OU mode dégradé CONVERTISSEUR AC/DC &
MACHINE
OU mode dégradé CONVERTISSEUR DC/DC
OU mode dégradé BATTERIE

SECURITE = mode KO SUPERCONDENSATEUR
OU mode KO CONVERTISSEUR AC/DC & MACHINE
OU mode KO CONVERTISSEUR DC/DC
OU mode KO BATTERIE

On notera que dans certaines formes de réalisation, le mode SECURITE peut éventuellement se déclencher si deux ou plusieurs modes dégradés sont déclarés. Bien entendu, les équations logiques ci-dessus sont données à titre d'exemple non limitatif.

BLOC MACHINE D'ETAT SYSTEME TOURNANT 143

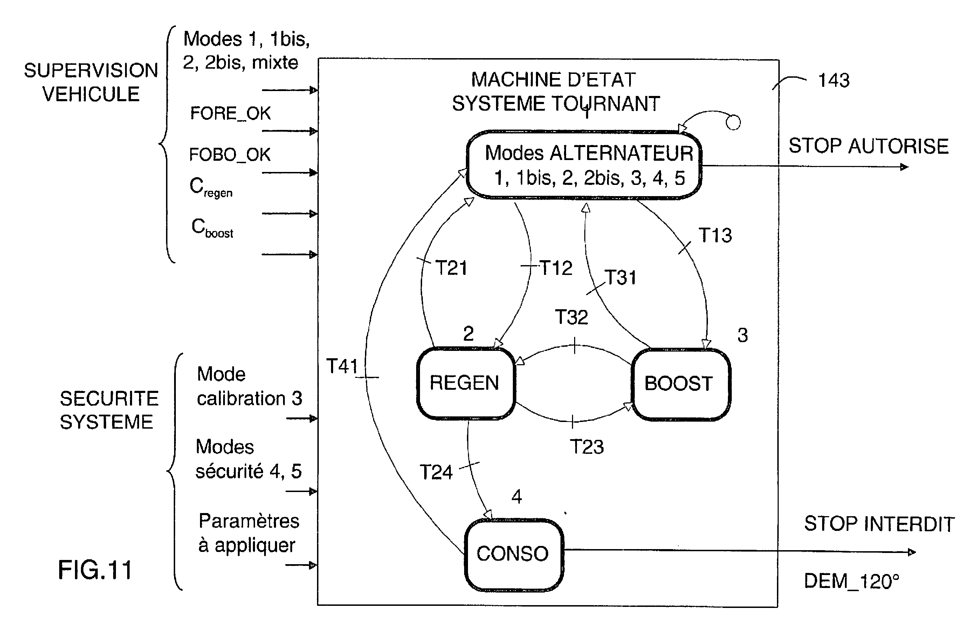

En référence plus particulièrement aux Fig.11, le bloc MACHINE D'ETAT SYSTEME TOURNANT 143 est maintenant décrit de manière détaillée.

Si la classe de fonctionnement est C, D ou E, le mode alternateur par défaut est le mode 1 ou 1 bis selon la stratégie adoptée. Les modes particuliers 3, 4 et 5 ne sont pas décrits ici.

Avant le premier démarrage et dans la phase de réveil du système, selon la tension mesurée des capacités les différents drapeaux sont initialisés :

1 - $X_{max-regen} > X_{mes} > X_{max\_120°}$ (cas où $X_{max\_regen} > X_{max\_120°}$)
CONSO=VRAI
ARRÊT_INTERDIT=VRAI ET ARRÊT_AUTORISE=FAUX
DEM_120°=VRAI (par sécurité)
2 - $Xmax\_120° > Xmes > Xmax$
CONSO=VRAI
ARRÊT_INTERDIT =FAUX ET ARRÊT_AUTORISE=VRAI
DEM_112°C=VRAI
3 - $Xmes < Xmax$
CONSO=FAUX
ARRÊT_INTERDIT=FAUX ET ARRÊT_AUTORISE=VRAI
DEM_120°=FAUX

La référence CONSO ci-dessus concerne un mode BOOST particulier exécuté pour consommer une énergie disponible dans le supercondensateur 12. La référence ARRÊT concerne le mode MARCHE/ARRÊT (dit habituellement « Stop&Go ») décrit plus haut dans la description. Les références DEM et 120° concernent un mode démarreur de la machine 10 dans lequel, en phase initiale du démarrage du moteur thermique 5, la machine 10 est alimentée avec des tensions triphasées dont les alternances sont limités à 120° afin notamment de limiter l'appel de courant dans la phase initiale du démarrage.

Processus 1 « ALTERNATEUR SELON MODE »

Dans ce mode, la régulation se fait selon le mode défini 1, 1bis, 2, 2bis ou mixte.

Après le premier démarrage et jusqu'à ce que les fonctions MARCHE/ARRÊT soient possibles, on impose le mode1, 1 bis ou 2bis s'il n'y a pas de mode esclave prioritaire.

Si les conditions du véhicule demande à changer de mode alternateur, la transition se fait en souplesse en adaptant les paramètres de contrôle selon des pentes ou d'autres types de trajectoire et en imposant durant la transition (si Xcons2 est le calcul de la nouvelle consigne) :

- Si Xcons2>Xcons1 alors (REGEN_OK=VRAI ET BOOST_OK=FAUX) et mode 1
- Si Xcons2 < Xcons1 alors (REGEN_OK=FAUX ET BOOST _OK=VRAI) et mode 1

Ces conditions sont imposées jusqu'à ce que les conditions du mode choisie soient réalisées.

Si le mode CONSO (CONSO=VRAI) a été activé, il est nécessaire de diminuer la tension du supercondensateur. Différentes stratégies de consommations sont possibles et les moyens pour baisser la composante de tension fluctuante X dépendent aussi de la phase d'utilisation du véhicule.

Le moteur thermique étant tournant, les modes de consommation privilégiés sont :

○ 1 - Elever la tension du réseau Vb s'il y a des consommateurs et sans changer les modes alternateurs.
○ 2 - Modes BOOST normaux
○ 3 - Mode BOOST_CONSO afin d'accélérer la consommation

Le moteur thermique étant arrêté (selon la stratégie choisie) :

○ 1 - Mode démarrage 120°
○ 2 - Dissipation Joule (rotor ou stator) si mode de stationnement depuis « suffisamment » longtemps.

Selon la stratégie d'inhibition, quand la tension redescend en dessous du seuil maximal autorisé ($X_{max-120°}$), le drapeau CONSO revient à la valeur FAUX ainsi que les drapeaux ARRÊT_INTERDIT =FAUX et ARRÊT_AUTORISE=VRAI. La partie algorithmique qui gère la fonction MARCHE/ARRÊT se déterminera par rapport au drapeau DEM_120°. Lorsque la tension descend dans la zone nominale ($X_{mes} < X_{max}$), le drapeau DEM_120° revient à FAUX.

On notera que dans la stratégie où la fonction ARRÊT est inhibée le cas où le moteur thermique est arrêté n'est possible que par une action sur la clé de contact. Cependant, en mode pilotage esclave, le superviseur du contrôle moteur peut demander un démarrage par le système 1 si les conditions le permettent. Ces démarrages « forcés » sont mémorisés sans en avertir le conducteur pour analyse future en maintenance. Dans la stratégie où l'on ne désire pas que la fonction ARRÊT soit inhibée, il faut choisir le seuil $X_{max-regen}$ de la transition T24 (détaillée ci-dessous) inférieur à la tension maximale autorisant le démarrage 120° $X_{max\_120°}$.

*Transition T 12*

La transition T12 correspond au passage « ALTERNATEUR => REGEN » et s'active si et seulement si :

- FORE_OK = VRAI
- ET REGEN_OK = VRAI
- ET $C_{regen}$ > seuil

On notera que la fonction REGEN peut être activée sous certaines limitations même dans les modes 3, 4 et 5.

*Transition T13*

La transition T13 correspond au passage « ALTERNATEUR => BOOST » et s'active si et seulement si :

- FOBO_OK = VRAI
- ET BOOST_OK = VRAI
- ET $C_{boost}$ > seuil

Processus 2 REGEN

C'est un processus itératif car la composante de tension fluctuante X varie avec l'augmentation du rapport cyclique et les paramètres de commande doivent être adaptés pour maintenir la consigne de couple.

*Transition T21*

La transition T21 correspond au passage « REGEN => ALTERNATEUR » et s'active si et seulement si :

- REGEN_OK=FAUX
- OU $C_{regen}$ < seuil

*Transition T23*

La transition T23 correspond au passage « REGEN => BOOST » et s'active si et seulement si :

- FOBO_OK = VRAI
- ET BOOST_OK = VRAI
- ET $C_{boost}$ > seuil

*Transition T24*

La transition T24 correspond au passage « REGEN => CONSO » et s'active si et seulement si :

- $X_{mes} > X_{max\_regen}$

Pour autoriser la fonction MARCHE/ARRÊT, ce seuil $X_{max\_regen}$ doit être choisi comme étant inférieur à la limite maximale de redémarrage ($X_{max\_regen} < X_{max\_120°}$) en prenant certaines protections telles que le démarrage 120°. Si l'on veut maximiser la capacité de freinage récupératif ($X_{max-re}g_{en} > X_{max\_120°}$), il est nécessaire d'inhiber la fonction MARCHE/ARRÊT tant que la tension ne redescend pas en dessous du seuil de sécurité $X_{max-120°}$.

Processus 3 BOOST

Le processus BOOST correspond à un passage dans un mode actionneur (assistance en couple) avec comme consigne la valeur du couple $C_{boost}$. C'est un processus itératif car la composante de tension fluctuante X diminuant avec le temps, il est nécessaire d'adapter les paramètres de commande pour maintenir la consigne de couple. L'application du couple se fait d'une manière progressive afin que les accoups ne soit pas perceptibles.

*Transition T31*

La transition T31 correspond au passage « BOOST => ALTERNATEUR » et s'active si et seulement si :

- FOBO_OK = FAUX
- OU BOOST_OK = FAUX
- OU $C_{boost}$ < seuil

*Transition T32*

La transition T32 correspond au passage « BOOST => REGEN » et s'active si et seulement si :

- FORE_OK = VRAI
- ET REGEN_OK = VRAI
- ET $C_{regen}$ > seuil

Processus 4 CONSO

Ce processus n'intervient que si la tension finale après un freinage récupératif est supérieure à un certain seuil. Les moyens pour baisser la composante de tension fluctuante X dépendent de la phase d'utilisation du véhicule et ont été décrit ci-dessus dans le processus 1.
Le passage dans ce processus est mémorisé grâce à un drapeau : CONSO=VRAI et selon la stratégie choisie, la fonction MARCHE/ARRÊT est soit inhibée par l'intermédiaire d'un autre drapeau ARRÊT_INTERDIT = VRAI soit limitée par une mode démarrage 120˚ au travers du drapeau DEM_120˚=VRAI.

*Transition T41*

**[0145]** - La transition T41 correspond au passage « CONSO => ALTERNATEUR ».

DESCRIPTION DES MODES ALTERNATEUR

Dans la description qui suit de différents modes alternateur, on considère que les variables $X_{min}$ et $X_{max}$ sont des sorties du bloc SECURITE SYSTEME ou bien des variables internes à chaque mode. Bien entendu, il s'agit là d'un exemple particulier de réalisation qui ne limite en rein la portée de la présente invention.

MODE 1

Il s'agit d'un mode alternateur dans lequel la composante de tension fluctuante X est fixée à une valeur déterminée indiquée par une consigne.
La tension de consigne peut être une valeur médiane ou être imposée par le superviseur de véhicule ou même dépendre de l'application sans que cela limite en soit ce mode de fonctionnement.
Dans ce mode 1, les conditions suivantes s'appliquent sur les modes REGEN et BOOST :

Si $X_{mes} >= X_{cons}$ alors (BOOST_OK = VRAI ET REGEN_OK = FAUX)
Si $X_{mes} <= X_{cons}$ alors (BOOST_OK = FAUX ET REGEN_OK = VRAI)

La tension de consigne peut donc être une valeur médiane entre $X_{min}$ et $X_{max}$. Cependant, selon les applications, la tension de consigne pourra être plus proche de $X_{min}$ s'il y a davantage de consommateurs sur le réseau Vb ou bien plus proche de $X_{max}$ s'il y a davantage de consommateurs sur le réseau Vb+X .

MODE 1 bis

Il s'agit d'un mode alternateur dans lequel la composante de tension fluctuante X est fixée à une valeur optimale.

Les conditions suivantes s'appliquent sur les modes REGEN et BOOST:

Si Xmes >= $X_{cons}$ alors (BOOST_OK = VRAI ET REGEN_OK = FAUX)
Si Xmes <= $X_{cons}$ alors (BOOST_OK = FAUX ET REGEN_OK = VRAI)

Le calcul de la valeur optimale peut se faire par modélisation, par cartographie ou par interpolation afin de trouver la tension fixe qui est optimale au sens de la conversion de l'énergie électrique. A cette fin, des cartographies de rendements pour le convertisseur AC/DC en mode onduleur et pour le convertisseur DC/DC pourront être utilisées. La routine de calcul ou la cartographie trouve alors la composante de tension fluctuante X qui optimise le rendement global r1%*r2% en fonction des estimations des consommations $P_{conso14V}$ et $P_{conso+X}$. La consigne n'est donc pas fixe et s'adapte au changement de consommation électrique.

On notera que le rendement alternateur r1 % dépend en premier ordre de la composante de tension fluctuante X, de la vitesse de rotation de la machine et du courant débité, alors que le rendement r2% du convertisseur DC/DC dépend de l'écart de tension entre les 2 réseaux de tension et du débit sur le réseau Vb. Les maximums de rendements correspondent donc rarement à la même composante de tension fluctuante X et la tension choisie sera donc généralement une valeur de compromis.

MODE 2

Il s'agit d'un mode alternateur dit forcé alterné dans lequel la tension de consigne devient $X_{min}$ dès que la tension mesurée arrive à $X_{max}$.

Il s'agit d'un mode de type « bande-bande » entre les tensions $X_{min}$ et $X_{max}$.

Les conditions suivantes s'appliquent sur les modes REGEN et BOOST:

Si $X_{mes}$ >= $X_{max}$ alors (BOOST_OK = VRAI ET REGEN_OK = FAUX)
Si $X_{mes}$ <= $X_{min}$ alors (BOOST_OK = FAUX ET REGEN_OK = VRAI) MODE 2bis

Il s'agit d'un mode alternateur dit libre alterné sans aucune consigne entre $X_{min}$ et $X_{max}$. Ce mode alterné est efficace si les consommateurs sont peu nombreux et les phases de freinage récupératif nombreuses. Dès que la consommation augmente, il est souvent préférable de passer sur un autre mode alternateur.

Les conditions suivantes s'appliquent sur les modes REGEN et BOOST:

Si $X_{mes}$ >= $X_{max}$ alors (BOOST_OK = VRAI ET REGEN_OK = FAUX)
Si $X_{mes}$ <= $X_{min}$ alors (BOOST_OK = FAUX ET REGEN_OK = VRAI)

MODE mixte

Il s'agit d'un mode alternateur dit sur plage de vitesse. Si la capacité de stockage de l'énergie électrique (supercondensateur) et suffisante au regard des consommations électriques, il est possible d'envisager l'application d'un mode alternateur seulement sur certaines plages de vitesse, en mélangeant plusieurs des modes alternateur déjà décrits.

Dans cette forme de réalisation particulière, les conditions suivantes caractérisent ce mode mixte :

Si N > Nmax alors (REGEN_OK=VRAI ET BOOST_OK = FAUX)
Si N < Nmax alors mode 1 bis

Ce mode mixte permet de ne passer en mode alternateur que sur des plages de régime moteur intéressantes du point de vue du rendement de la machine électrique tournante. On notera que le mode 2bis peut dans certains cas remplacer avantageusement le mode 1 bis pour une utilisation sur route ou autoroute.

Bien entendu , la présente invention ne se limite pas aux formes de réalisation particulières qui ont été décrites ci-dessus et peut donner lieu selon les applications à différentes variantes et modifications. Ainsi, dans certaines applications de l'invention, le module de stratégies de pilotage est capable de fournir au système du véhicule des informations sur les équipements externes à piloter en fonction de sa connaissance de la situation / état du véhicule. Par exemple, le module peut indiquer au système du véhicule que le compresseur de climatisation est utilisable avec davantage de puissance lorsque le module a connaissance d'un bon rendement du moteur thermique ou lorsque le système micro-

**EP 2 032 405 B1**

hybride est dans un mode REGEN impliquant une disponibilité d'énergie.

**Revendications**

1. Système micro-hybride pour véhicule de transport comprenant une machine électrique tournante (10) apte à être couplée mécaniquement à un moteur (5) dudit véhicule, un convertisseur alternatif-continu (11), un convertisseur continu-continu (12), des premier (12) et second (2) réservoirs d'énergie électrique aptes à stocker une énergie électrique produite par ladite machine électrique tournante (10) et à restituer celle-ci pour des dispositifs consommateurs équipant ledit véhicule, et des moyens de commande (14) pour commander le fonctionnement dudit système micro-hybride, lesdits moyens de commande (14) comprenant des moyens de pilotage (140) à la fois aptes à piloter de manière autonome des modes de fonctionnement (ALTERNATEUR, REGEN, BOOST) du système micro-hybride selon une pluralité de stratégies en fonction au moins de leur propre connaissance d'un état interne du système micro-hybride et d'un état du véhicule et aptes à piloter en esclave lesdits modes de fonctionnement (ALTERNATEUR, REGEN, BOOST) conformément à des instructions contenues dans des demandes externes provenant d'un système du véhicule, **caractérisé en ce que** lesdits moyens de pilotage (140) comprennent des moyens à machine d'état (ALTERNATEUR, REGEN, BOOST, BOOST_CONSO)) autorisant des transitions (T) entre lesdits modes de fonctionnement du système micro-hybride en fonction au moins d'informations de supervision et d'informations de sécurité produites par lesdits moyens de pilotage (140)

2. Système micro-hybride selon la revendication 1, **caractérisé en ce que** lesdits moyens de pilotage (140) comprennent des moyens de supervision (141) qui déterminent une situation du véhicule et autorisent et définissent au moins partiellement au moins un desdits modes de fonctionnement (ALTERNATEUR, REGEN, BOOST) du système micro-hybride en tenant compte de ladite détermination de la situation du véhicule et/ou de demandes externes provenant d'un système du véhicule.

3. Système micro-hybride selon la revendication 2, **caractérisé en ce que** lesdits moyens de supervision (141) comprennent des moyens (1410) pour estimer une situation du véhicule parmi au moins l'une des situations suivantes :

   - le véhicule est dans un environnement urbain,
   - le véhicule est sur route,
   - le véhicule est sur autoroute.

4. Système micro-hybride selon la revendication 2 ou 3, **caractérisé en ce que** lesdits moyens de supervision (141) comprennent des moyens (1413) pour autoriser et sélectionner un mode de fonctionnement en alternateur de ladite machine électrique tournante (10) parmi plusieurs modes de fonctionnement en alternateur disponibles (modes 1, 1 bis, 2, 2bis, mixte) en tenant compte au moins de ladite situation du véhicule.

5. Système micro-hybride selon l'une quelconque des revendications 2 à 4, **caractérisé en ce que** lesdits moyens de supervision (141) comprennent des moyens (FORE_OK, 1414, 1411) pour autoriser et définir un mode de fonctionnement de freinage récupératif de ladite machine électrique tournante (10).

6. Système micro-hybride selon l'une quelconque des revendications 2 à 5, **caractérisé en ce que** lesdits moyens de supervision (141) comprennent des moyens (FOBO_OK, 1415, 1412) pour autoriser et définir un mode de fonctionnement d'assistance en couple de ladite machine électrique tournante (10).

7. Système micro-hybride selon l'une quelconque des revendications 1 à 6, **caractérisé en ce que** lesdits moyens de pilotage (140) comprennent des moyens de sécurité (142) qui définissent au moins une limite de fonctionnement du système micro-hybride à partir d'une représentation interne d'au moins une partie des éléments fonctionnels du système micro-hybride et/ou d'une demande externe provenant d'un système du véhicule.

8. Système micro-hybride selon la revendication 7, **caractérisé en ce que** ladite au moins une limite de fonctionnement est comprise dans les limites de fonctionnement suivantes du système micro-hybride : des valeurs minimale et maximale de plage de fonctionnement d'une composante de tension fluctuante (X) du système micro-hybride ($X_{min}$, $X_{max}$), des valeurs de calibration / diagnostic ($X_{calibration}$), de protection ($X_{protection}$) et de sécurité ($X_{sécurité}$) de ladite composante de tension fluctuante (X), une valeur maximale ($I_{ex\_max}$) d'un courant d'excitation d'un rotor de ladite machine électrique tournante (10) et une valeur maximale ($C_{regen\_max}$) d'un couple mécanique à prélever dans un mode de freinage récupératif (REGEN) de ladite machine électrique tournante (10).

**9.** Système micro-hybride selon la revendication 7 ou 8, **caractérisé en ce que** ladite représentation interne couvre au moins les éléments fonctionnels suivants : ladite machine électrique tournante (10), ledit convertisseur alternatif-continu (11), ledit convertisseur continu-continu (13) et lesdits premier (12) et second (2) réservoirs d'énergie électrique..

**10.** Système micro-hybride selon l'une quelconque des revendications 3 à 7 et la revendication 8 ou 9, **caractérisé en ce que** lesdites informations de supervision et informations de sécurité sont fournies respectivement par lesdits moyens de supervision (141) et moyens de sécurité (142).

**11.** Système micro-hybride selon l'une quelconque des revendications 1 à 10, **caractérisé en ce que** lesdits modes de fonctionnement comprennent les modes suivants :

- au moins un mode alternateur (ALTERNATEUR ; modes 1, 1 bis, 2, 2bis, mixte) ;
- au moins un mode de freinage récupératif (REGEN ; REGEN1, REGEN2) ; et
- au moins un mode d'assistance en couple (BOOST ; BOOST1, BOOST2, BOOST_CONSO).

**12.** Système micro-hybride selon l'une quelconque des revendications 1 à 11, **caractérisé en ce que** lesdits modes de fonctionnement comprennent au moins un des cinq modes alternateur suivants :

- un mode alternateur (mode 1) dans lequel une composante de tension fluctuante est fixée à une valeur déterminée indiquée par une consigne ;
- un mode alternateur (mode 1 bis) dans lequel ladite composante de tension fluctuante (X) est fixée à une valeur optimale ;
- un mode alternateur (mode 2) dans lequel ladite consigne passe à une valeur minimale ($X_{min}$) lorsque ladite composante de tension fluctuante mesurée atteint une valeur maximale ($X_{max}$) ;
- un mode alternateur (mode 2bis) dans lequel aucune consigne n'est fixée entre des valeurs minimale ($X_{min}$) et maximale ($X_{max}$) de ladite composante de tension fluctuante ; et
- un mode alternateur mixte (mode mixte) comprenant au moins deux des modes ci-dessus sur des plages de vitesse de fonctionnement différente de ladite machine électrique tournante (10).

**13.** Système micro-hybride selon l'une quelconque des revendications 1 à 12, **caractérisé en ce que** lesdits modes de fonctionnement comprennent au moins un des trois modes d'assistance en couple suivants :

- un mode d'assistance en couple (BOOST1) intervenant consécutivement à un appui sur une pédale d'accélérateur du véhicule ;
- un mode d'assistance en couple (BOOST2) intervenant sur un régime de ralenti du moteur ;
- un mode d'assistance en couple intervenant lors d'un changement de rapport dans une boite de vitesse du véhicule ; et
- un mode d'assistance en couple (BOOST_CONSO) visant à consommer une énergie électrique stockée disponible dans au moins un desdits réservoirs d'énergie électrique.

**14.** Système micro-hybride selon l'une quelconque des revendications 1 à 13, **caractérisé en ce que** au moins l'un desdits premier et second réservoirs d'énergie électrique comprend au moins un supercondensateur (12).

**15.** Système micro-hybride selon la revendication 14, **caractérisé en ce que** ledit réservoir d'énergie électrique comprenant un supercondensateur (12) alimente un réseau de bord sous une tension continue (Vb+X) comportant une composante de tension fluctuante (X), et l'autre réservoir d'énergie électrique (2) alimente un autre réseau de bord sous une tension continue sensiblement stable (Vb).

**16.** Système micro-hybride selon l'une quelconque des revendications 1 à 15, **caractérisé en ce que** ledit module de stratégies de pilotage comporte des moyens pour fournir à un système du véhicule des informations sur des équipements externes à piloter en fonction de sa connaissance de la situation / état du véhicule.

**Claims**

**1.** Micro-hybrid system for a transport vehicle comprising a rotating electrical machine (10) capable of being mechanically coupled to an engine (5) of the said vehicle, an AC-DC converter (11), a DC-DC converter (13), a first electrical energy reservoir (12) and a second electrical energy reservoir (2) which are capable of storing an electrical energy produced by the said rotating electrical machine (10) and of restoring the latter for consuming devices fitted to the said vehicle, and command means (14) for commanding the operation of the said micro-hybrid system, the said command means (14) comprising control means (140) simultaneously capable of controlling in standalone manner operating modes (ALTERNATOR, REGEN, BOOST) of the micro-hybrid system according to a plurality of strategies as a function at least of their own knowledge of an internal state of the micro-hybrid system and of a state of the vehicle and capable of controlling in slave mode the said operating modes (ALTERNATOR, REGEN, BOOST) according to instructions contained in external requests originating from a system of the vehicle, **characterized in that** the said control means (140) comprise finite-state-machine means (ALTERNATOR, REGEN, BOOST, BOOST_CONSO) allowing transitions (T) between the said operating modes of the micro-hybrid system as a function at least of supervision information and safety information produced by the said control means (140).

2. Micro-hybrid system according to Claim 1, **characterized in that** the said control means (140) comprise supervision means (141) which determine a situation of the vehicle and allow and define at least partially at least one of the said operating modes (ALTERNATOR, REGEN, BOOST) of the micro-hybrid system while taking account of the said determination of the situation of the vehicle and/or of external requests originating from a system of the vehicle.

3. Micro-hybrid system according to Claim 2, **characterized in that** the said supervision means (141) comprise means (1410) for estimating one situation of the vehicle out of at least one of the following situations:

   - the vehicle is in an urban environment,
   - the vehicle is on the open road,
   - the vehicle is on a motorway.

4. Micro-hybrid system according to Claim 2 or 3, **characterized in that** the said supervision means (141) comprise means (1413) for allowing and selecting an alternator operating mode of the said rotating electrical machine (10) from several available alternator operating modes (modes 1, 1a, 2, 2a, mixed) while taking account at least of the said situation of the vehicle.

5. Micro-hybrid system according to any one of Claims 2 to 4, **characterized in that** the said supervision means (141) comprise means (FORE_OK, 1414, 1411) for allowing and defining an operating mode of regenerative braking of the said rotating electrical machine (10).

6. Micro-hybrid system according to any one of Claims 2 to 5, **characterized in that** the said supervision means (141) comprise means (FOBO_OK, 1415, 1412) for allowing and defining an operating mode of torque assistance of the said rotating electrical machine (10).

7. Micro-hybrid system according to any one of Claims 1 to 6, **characterized in that** the said control means (140) comprise safety means (142) which define at least one operating limit of the micro-hybrid system on the basis of an internal representation of at least one portion of the functional elements of the micro-hybrid system and/or of an external request originating from a system of the vehicle.

8. Micro-hybrid system according to Claim 7, **characterized in that** the said at least one operating limit is included within the following operating limits of the micro-hybrid system: minimal and maximal values of the operating range of a fluctuating voltage component (X) of the micro-hybrid system ($X_{min}$, $X_{max}$), calibration/diagnostic values ($X_{calibration}$), protection ($X_{protection}$) and safety ($X_{safety}$) values of the said fluctuating voltage component (X), a maximal value ($I_{ex\_max}$) of an excitation current of a rotor of the said rotating electrical machine (10) and a maximal value (Cregen_max) of a mechanical torque to be drawn in a regenerative braking mode (REGEN) of the said rotating electrical machine (10).

9. Micro-hybrid system according to Claim 7 or 8, **characterized in that** the said internal representation covers at least the following functional elements: the said rotating electrical machine (10), the said AC-DC converter (11), the said DC-DC converter (13) and the said first electrical energy reservoir (12) and second electrical energy reservoir (2).

10. Micro-hybrid system according to any one of Claims 3 to 7 and Claim 8 or 9, **characterized in that** the said supervision information and safety information are provided respectively by the said supervision means (141) and safety means (142).

**11.** Micro-hybrid system according to any one of Claims 1 to 10, **characterized in that** the said operating modes comprise the following modes:

- at least one alternator mode (ALTERNATOR; modes 1, 1a, 2, 2a, mixed);
- at least one regenerative braking mode (REGEN; REGEN1, REGEN 2); and
- at least one torque-assistance mode (BOOST; BOOST1, BOOST2, BOOST_CONSO).

**12.** Micro-hybrid system according to any one of Claims 1 to 11, **characterized in that** the said operating modes comprise at least one of the following five alternator modes:

- an alternator mode (mode 1) in which a fluctuating voltage component is fixed at a determined value indicated by a setpoint;
- an alternator mode (mode 1a) in which the said fluctuating voltage component (X) is fixed at an optimal value;
- an alternator mode (mode 2) in which the said setpoint moves to a minimal value ($X_{min}$) when the said measured fluctuating voltage component reaches a maximal value ($X_{max}$) ;
- an alternator mode (mode 2a) in which no setpoint is fixed between the minimal value ($X_{min}$) and maximal value ($X_{max}$) of the said fluctuating voltage component; and
- a mixed alternator mode (mixed mode) comprising at least two of the above modes out of different operating speed ranges of the said rotating electrical machine (10).

**13.** Micro-hybrid system according to any one of Claims 1 to 12, **characterized in that** the said operating modes comprise at least one of the following three torque-assistance modes:

- a torque-assistance mode (BOOST1) occurring following a pressing on an accelerator pedal of the vehicle;
- a torque-assistance mode (BOOST2) occurring at an idle speed of the engine;
- a torque-assistance mode occurring when there is a change of gear in the gearbox of the vehicle; and
- a torque-assistance mode (BOOST_CONSO) designed to consume a stored electrical energy available in at least one of the said electrical energy reservoirs.

**14.** Micro-hybrid system according to any one of Claims 1 to 13, **characterized in that** at least one of the said first and second electrical energy reservoirs comprises at least one ultracapacitor (12).

**15.** Micro-hybrid system according to Claim 14, **characterized in that** the said electrical energy reservoir comprising an ultracapacitor (12) supplies an on-board network with a DC voltage (Vb+X) comprising a fluctuating voltage component (X), and the other electrical energy reservoir (2) supplies another on-board network with a substantially stable DC voltage (Vb).

**16.** Micro-hybrid system according to any one of Claims 1 to 15, **characterized in that** the said control-strategies module comprises means for supplying a system of the vehicle with information on external equipment to be controlled as a function of its knowledge of the situation/state of the vehicle.

**Patentansprüche**

**1.** Mikrohybridsystem für ein Transportfahrzeug, das eine rotierende elektrische Maschine (10), die mechanisch mit einem Motor (5) des Fahrzeugs gekoppelt werden kann, einen Wechselstrom-Gleichstrom-Wandler (11), einen Gleichstrom-Gleichstrom-Wandler (13), erste (12) und zweite (2) elektrische Energiespeicher, die eine von der rotierenden elektrischen Maschine (10) erzeugte elektrische Energie speichern und diese für Verbrauchervorrichtungen abgeben können, mit denen das Fahrzeug ausgestattet ist, und Steuereinrichtungen (14) enthält, um den Betrieb des Mikrohybridsystems zu steuern, wobei die Steuereinrichtungen (14) Ansteuereinrichtungen (140) enthalten, die sowohl fähig sind, Betriebsarten (GENERATOR, REGEN, BOOST) des Mikrohybridsystems gemäß einer Vielzahl von Strategien abhängig von mindestens ihrer eigenen Kenntnis eines inneren Zustands des Mikrohybridsystems und eines Zustands des Fahrzeugs autonom anzusteuern, als auch fähig sind, die Betriebsarten (GENERATOR, REGEN, BOOST) im Slave-Modus gemäß Anweisungen anzusteuern, die in von einem System des Fahrzeugs kommenden externen Anforderungen enthalten sind, **dadurch gekennzeichnet, dass** die Ansteuereinrichtungen (140) Einrichtungen mit Zustandsmaschine (GENERATOR, REGEN, BOOST, BOOST_CONSO) enthalten, die Übergänge (T) zwischen den Betriebsarten des Mikrohybridsystems abhängig mindestens von Überwachungsinformationen und von Sicherheitsinformationen erlauben, die von den Ansteuereinrichtungen (140) erzeugt werden.

2. Mikrohybridsystem nach Anspruch 1, **dadurch gekennzeichnet, dass** die Ansteuereinrichtungen (140) Überwachungseinrichtungen (141) enthalten, die eine Situation des Fahrzeugs bestimmen und zumindest teilweise eine der Betriebsarten (GENERATOR, REGEN, BOOST) des Mikrohybridsystems erlauben und definieren, unter Berücksichtigung der Bestimmung der Situation des Fahrzeugs und/oder von externen Anforderungen, die von einem System des Fahrzeugs kommen.

3. Mikrohybridsystem nach Anspruch 2, **dadurch gekennzeichnet, dass** die Überwachungseinrichtungen (141) Einrichtungen (1410) enthalten, um eine Situation des Fahrzeugs unter mindestens einer der folgenden Situationen einzuschätzen:

   - das Fahrzeug ist in einer städtischen Umgebung,
   - das Fahrzeug ist auf der Landstraße,
   - das Fahrzeug ist auf der Autobahn.

4. Mikrohybridsystem nach Anspruch 2 oder 3, **dadurch gekennzeichnet, dass** die Überwachungseinrichtungen (141) Einrichtungen (1413) enthalten, um eine Generator-Betriebsart der rotierenden elektrischen Maschine (10) unter mehreren verfügbaren Generator-Betriebsarten (Betriebsarten 1, 1bis, 2, 2bis, gemischt) unter Berücksichtigung der Situation des Fahrzeugs zu erlauben und auszuwählen.

5. Mikrohybridsystem nach einem der Ansprüche 2 bis 4, **dadurch gekennzeichnet, dass** die Überwachungseinrichtungen (141) Einrichtungen (FORE_OK, 1414, 1411) enthalten, um eine Nutzbremsung-Betriebsart der rotierenden elektrischen Maschine (10) zu erlauben und zu definieren.

6. Mikrohybridsystem nach einem der Ansprüche 2 bis 5, **dadurch gekennzeichnet, dass** die Überwachungseinrichtungen (141) Einrichtungen (FOBO_OK, 1415, 1412) enthalten, um eine Drehmomentunterstützung-Betriebsart der rotierenden elektrischen Maschine (10) zu erlauben und zu definieren.

7. Mikrohybridsystem nach einem der Ansprüche 1 bis 6, **dadurch gekennzeichnet, dass** die Ansteuereinrichtungen (140) Sicherheitseinrichtungen (142) enthalten, die mindestens eine Betriebsgrenze des Mikrohybridsystems ausgehend von einer internen Darstellung mindestens eines Teils der Funktionselemente des Mikrohybridsystems und/oder von einer externen Anforderung definieren, die von einem System des Fahrzeugs kommt.

8. Mikrohybridsystem nach Anspruch 7, **dadurch gekennzeichnet, dass** die mindestens eine Betriebsgrenze in den folgenden Betriebsgrenzen des Mikrohybridsystems enthalten ist: minimale und maximale Betriebsbereichswerte einer fluktuierenden Spannungskomponente (X) des Mikrohybridsystems ($X_{min}$, $X_{max}$), Werte der Kalibrierung/Diagnose ($X_{calibration}$), des Schutzes ($X_{protection}$) und der Sicherheit ($X_{sécurité}$) der fluktuierenden Spannungskomponente (X), ein maximaler Wert ($I_{ex\_max}$) eines Erregerstroms eines Rotors der rotierenden elektrischen Maschine (10) und ein maximaler Wert ($C_{regen\_max}$) eines mechanischen Moments, das in einer Nutzbremsung-Betriebsart (REGEN) der rotierenden elektrischen Maschine (10) abgenommen werden soll.

9. Mikrohybridsystem nach Anspruch 7 oder 8, **dadurch gekennzeichnet, dass** die interne Darstellung mindestens die folgenden Funktionselemente abdeckt: die rotierende elektrische Maschine (10), den Wechselstrom-Gleichstrom-Wandler (11), den Gleichstrom-Gleichstrom-Wandler (13) und den ersten (12) und zweiten (2) elektrischen Energiespeicher.

10. Mikrohybridsystem nach einem der Ansprüche 3 bis 7 und Anspruch 8 oder 9, **dadurch gekennzeichnet, dass** die Überwachungsinformationen und die Sicherheitsinformationen von den Überwachungseinrichtungen (141) bzw. den Sicherheitseinrichtungen (142) geliefert werden.

11. Mikrohybridsystem nach einem der Ansprüche 1 bis 10, **dadurch gekennzeichnet, dass** die Betriebsarten die folgenden Betriebsarten enthalten:

   - mindestens eine Generator-Betriebsart (GENERATOR; Betriebsarten 1, 1bis, 2, 2bis, gemischt);
   - mindestens eine Nutzbremsung-Betriebsart (REGEN; REGEN1, REGEN2); und
   - mindestens eine Drehmomentunterstützung-Betriebsart (BOOST, BOOST1, BOOST2, BOOST_CONSO).

**12.** Mikrohybridsystem nach einem der Ansprüche 1 bis 11, **dadurch gekennzeichnet, dass** die Betriebsarten mindestens eine der fünf folgenden Generator-Betriebsarten enthalten:

- eine Generator-Betriebsart (Betriebsart 1), in der eine fluktuierende Spannungskomponente auf einen bestimmten Wert festgelegt wird, der durch einen Sollwert angezeigt wird;
- eine Generator-Betriebsart (Betriebsart 1bis), in der die fluktuierende Spannungskomponente (X) auf einen optimalen Wert festgelegt wird;
- eine Generator-Betriebsart (Betriebsart 2), in der der Sollwert auf einen minimalen Wert ($X_{min}$) geht, wenn die gemessene fluktuierende Spannungskomponente einen maximalen Wert ($X_{max}$) erreicht;
- eine Generator-Betriebsart (Betriebsart 2bis), in der kein Sollwert zwischen minimalem ($X_{min}$) und maximalem Wert ($X_{max}$) der fluktuierenden Spannungskomponente festgelegt wird; und
- eine gemischte Generator-Betriebsart (gemischte Betriebsart), die mindestens zwei der obigen Betriebsarten in unterschiedlichen Betriebsgeschwindigkeitsbereichen der rotierenden elektrischen Maschine (10) enthält.

**13.** Mikrohybridsystem nach einem der Ansprüche 1 bis 12, **dadurch gekennzeichnet, dass** die Betriebsarten mindestens drei der folgenden Drehmomentunterstützung-Betriebsarten enthalten:

- eine Drehmomentunterstützung-Betriebsart (BOOST1), die nach einem Drücken auf ein Gaspedal des Fahrzeug auftritt;
- eine Drehmomentunterstützung-Betriebsart (BOOST2), die bei einer Leerlaufdrehzahl des Motors auftritt;
- eine Drehmomentunterstützung-Betriebsart, die bei einem Schaltvorgang in einem Getriebe des Fahrzeugs auftritt; und
- eine Drehmomentunterstützung-Betriebsart (BOOST_CONSO), die darauf abzielt, eine gespeicherte elektrische Energie zu verbrauchen, die in mindestens einem der elektrischen Energiespeicher zur Verfügung steht.

**14.** Mikrohybridsystem nach einem der Ansprüche 1 bis 13, **dadurch gekennzeichnet, dass** mindestens einer der ersten und zweiten elektrischen Energiespeicher mindestens einen Superkondensator (12) enthält.

**15.** Mikrohybridsystem nach Anspruch 14, **dadurch gekennzeichnet, dass** der einen Superkondensator (12) enthaltende elektrische Energiespeicher ein Bordnetz unter einer Gleichspannung (Vb+X) speist, die eine fluktuierende Spannungskomponente (X) aufweist, und der andere elektrische Energiespeicher (2) ein anderes Bordnetz unter einer im Wesentlichen stabilen Gleichspannung (Vb) speist.

**16.** Mikrohybridsystem nach einem der Ansprüche 1 bis 15, **dadurch gekennzeichnet, dass** das Modul von Ansteuerstrategien Einrichtungen aufweist, um an ein System des Fahrzeugs Informationen über externe Geräte zu liefern, die abhängig von seiner Kenntnis der Situation/des Zustands des Fahrzeugs angesteuert werden sollen.

MOTEUR THERMIQUE — 5

Vb + X

11

AC / DC

13

DC / DC

Vb

12

2

10

L2

L3

L1

14

MODULE DE STRATEGIES DE PILOTAGE

3

SYSTEME VEHICULE — 4

140

μC

1

FIG.1

EP 2 032 405 B1

FIG.2

EP 2 032 405 B1

FIG.3

BLOC SUPERVISION VEHICULE

Estimateur situation — 1410

$\delta_{1\%}$

$\delta_{2\%}$

Mode_AL

SELECTEUR DE MODE DE FONCTIONNEMENT 1, 1bis, 2, 2bis mixte — 1413

141

**Modes 1, 1bis, 2, 2bis, Mixte**

**FORE_OK**
**FOBO_OK**

FOBO_OK

FORE_OK

Mode_FR, $C_{regen}$

Demande externe

Mesures REGEN — 1411

GENERATEUR DEMANDE REGEN

$C_{regen}$

1414

Mode_BO, $C_{boost}$

1412 — Mesures BOOST

GENERATEUR DEMANDE BOOST — 1415

$C_{boost}$

EP 2 032 405 B1

FIG.4

FIG.5

EP 2 032 405 B1

FIG.6

FIG.7

Taux_couple

Taux_couple

100%

100%

Vitesse d'appuie sur la
pédale d'accélérateur

$\delta_1$%

28

FIG.8

BLOC SECURITE SYSTEME

Limites Stop & Go — max / min — 1420

Limites Regen — max / min — 1421

min → Xmin

max → Xmax

SUPERVISEUR SUPERCONDENSATEUR — 1422

SUPERVISEUR CONVERTISSEUR AC/DC — 1423

SUPERVISEUR CONVERTISSEUR DC/DC — 1424

SUPERVISEUR BATTERIE — 1425

STRATEGIES SECURITE — 1426

142

Xmin

Xcalibration

Xmax

Xprotection
Iex_max
Cregen_max

Xsécurité
Iex_max
Cregen_max

Mode 3, 4 ou 5

EP 2 032 405 B1

FIG.9

EP 2 032 405 B1

EP 2 032 405 B1

Tension Vb+X

MODE DEGRADE

FONCTIONS
PUISSANCE
INTERDITES

FONCTIONS
PUISSANCE
INTERDITES

FONCTIONS
PUISSANCE
(REGEN + BOOST)

FONCTIONS PUISSANCE
MODE NOMINAL

MODE DEGRADE

Température

LIMITES
PERFORMANCE
$X_{min}$

CONSTRAINTES
FIABILITE
$X_{max}$

FIG.10

FIG.11

SUPERVISION VEHICULE
- Modes 1, 1bis, 2, 2bis, mixte
- FORE_OK
- FOBO_OK
- $C_{regen}$
- $C_{boost}$

SECURITE SYSTEME
- Mode calibration 3
- Modes sécurité 4, 5
- Paramètres à appliquer

MACHINE D'ETAT SYSTEME TOURNANT — 143

Modes ALTERNATEUR 1, 1bis, 2, 2bis, 3, 4, 5 → STOP AUTORISE

T21, T12, T13, T31, T32

2 REGEN

3 BOOST

T23

T41, T24

4 CONSO → STOP INTERDIT

DEM_120°

EP 2 032 405 B1

**EP 2 032 405 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6234932 B1